# EUROPEAN PATENT SPECIFICATION

(11) **EP 4 504 980 B1**
(45) Date of publication and mention of the grant of the patent: **25.11.2026**
(21) Application number: 23716381.1
(22) Date of filing: 03.04.2023
(51) Int. Cl.: C21B 13/00, C21B 13/02

(54) **METHOD AND CONFIGURATION FOR PRODUCING REDUCED METAL MATERIAL**
VERFAHREN UND ANORDNUNG ZUR HERSTELLUNG VON REDUZIERTEM METALLMATERIAL
PROCÉDÉ ET CONFIGURATION POUR PRODUIRE UN MATÉRIAU MÉTALLIQUE RÉDUIT

(30) Priority: 01.04.2022 SE 2250422
(43) Date of publication of application: 12.02.2025
(73) Proprietor: LUOSSAVAARA-KIIRUNAVAARA AB, 971 28 Luleå (SE)
(72) Inventor: ERIKSSON, Ola, 981 33 Kiruna (SE); ÅSTRÖM, Björn, 98137 Kiruna (SE); MARJAVAARA, Daniel, 981 37 Kiruna (SE); ROSTMARK, Susanne, 981 37 Kiruna (SE); TUOMAS, Göran, 972 39 Luleå (SE)
(74) Representative: Zacco Sweden AB
(86) International application number: PCT/SE2023/050298
(87) International publication number: WO 2023/191701

(56) References cited:
- EP-A1- 0 018 235
- WO-A1-2021/241272

## Description

### TECHNICAL FIELD

The present invention primarily relates to a method of reduction of a metal oxide material holding thermal energy into a reduced metal material.

The present invention further relates to a metal material production configuration adapted for reduction of a metal oxide material holding thermal energy into a reduced metal material.

The present invention further relates to a data program programmed for controlling the heat treatment process for heat treatment of the metal oxide material and/or the reduced metal material for producing a reduced metal material that is resistant to re-oxidation.

The present disclosure may relate to the process and the metal material production configuration for production of a carbon-free reduced metal material that is resistant to re-oxidation.

The present invention primarily concerns the mining industry.

Furthermore, the present invention also may concern manufacturers and suppliers of metal oxide material provider units, reduction facilities, steel making industries etc.

### BACKGROUND OF THE INVENTION

Different ways of passivation of reduced metal material by means of different types of reducing agents are known today.

However, current methods and configurations are ineffective and not optimal in view of the utilization of the reducing agent introduced into the reduction facility for reducing the metal oxide material. For providing sufficient heat to support the reduction process the reducing agent is strongly heated, which in turn destroys the reduction potential of the reducing agent. WO 2021/241272 A1 and EP 0 018 235 A1 further disclose a method for producing reduced metal material.

### SUMMARY OF THE INVENTION

There is an object to provide efficient reduction of the metal oxide material at the same time as efficient control of a heat treatment process is achieved by maintaining the reduction potential of the reducing agent for achieving an efficient production of reduced metal material that is resistant to re-oxidation.

There is an object to provide cost-efficient transportation supply chains of reduced metal material to other industries, such as to a steel making industry.

There is an object to produce a reduced metal material that can be used in cost-efficient production of steel making use of e.g. an electric arc furnace.

There is an object to provide a method of reduction of a metal oxide material holding thermal energy into a reduced metal material by fossil-free energy, or at least in substantially fossil-free, for producing the reduced metal material.

There is an object to provide a method by which the reduced metal material can be produced on an industrial scale, in a CO2-neutral and/or CO2-low emission and/or CO2 free fashion.

There is an object to provide a carbon free reduced metal material by an energy efficient process.

These or at least one of said objects has been achieved by a method of reduction of a metal oxide material holding thermal energy into a reduced metal material as disclosed in appended claims 1-7.

In such way is achieved that the chemical reactivity and/or high impetus of the hydrogen is maintained to a great extent. The chemical reactivity and/or high impetus being essential for providing an efficient reduction of the metal oxide material.

Alternatively, the step of controlling the temperature of the introduced pre-heated hydrogen containing reducing agent comprises adaptation of the temperature toward a pre-determined temperature for providing sintering of the metal oxide material subject to reduction and/or sintering and/or heat treatment of the reduced metal material during a pre-determined time period for reaching the at least one desired passivation parameter value.

Alternatively, the introduced hydrogen containing reducing agent comprises 80-100 % hydrogen, preferably 100% hydrogen.

Alternatively, the control circuitry is adapted for coarse setting of the thermal energy and is adapted for fine setting of the temperature of the introduced (pre-heated or cooled down) hydrogen containing reducing agent for achieving the at least one desired passivation parameter value.

In such way there is achieved efficient adjustment of the temperature for reduction of the metal oxide material at the same time as efficient adjustment of the temperature for heat treatment of the reduced metal material is achieved.

Alternatively, the step of reducing the metal oxide material in the upper interior portion is achieved by utilizing the thermal energy of the metal oxide material and by utilizing heat content of the partly reduced metal material in the upper interior portion to heat or further heat the introduced pre-heated hydrogen.

Alternatively, the temperature of the metal oxide material to be charged into the upper interior portion is controlled by the control circuitry to be within the range of 900-1500 °C, preferably 1000-1400 °C.

Alternatively, the temperature of the pre-heated hydrogen containing reducing agent is controlled by the control circuitry to be within the range of 100-400 °C, preferably 200-300 °C; or 0-300 °C, preferably 100-200 °C; or 50-250 °C, preferably 125-175 °C.

Alternatively, the temperature of the metal oxide material to be charged into the upper interior portion is controlled by the control circuitry to be within the range of 900-1500 °C, preferably 1000-1300 °C.

Alternatively, the temperature of the hydrogen containing reducing agent is controlled by the control circuitry to be within the range of 100-400 °C, preferably 200-300 °C; or 0-300 °C, preferably 100-200 °C.

By charging the metal oxide material from the metal oxide material provider unit directly into the reduction facility, which metal oxide material holds thermal energy that originates from a thermal process provided by the metal oxide material provider unit, it is achieved an efficient reduction and chemical reaction between the metal oxide material and the reducing agent at the same time as efficient control of the process is achieved by that the hydrogen containing reducing agent is introduced with undestroyed reduction potential and providing the heat treatment process for producing the reduced metal material that is resistant to re-oxidation.

Alternatively, the metal oxide material is formed as agglomerates and the thermal energy originates from a heating process provided by the metal oxide material provider unit.

Alternatively, the upper interior portion is adapted for reduction of the metal oxide material, holding the thermal energy.

Alternatively, the control circuitry is electrically coupled to the reducing agent temperature adjusting device configured to pre-heat a hydrogen containing reducing agent to be introduced into an intermediate interior portion and a lower interior portion of the reduction facility.

Alternatively, the intermediate interior portion and lower interior portion are configured for introduction of the pre-heated hydrogen containing reducing agent, which pre-heated hydrogen containing reducing agent is adapted to react with (reduce) the metal oxide material holding the thermal energy.

Alternatively, the hydrogen containing reducing agent is introduced into the intermediate interior portion and into the lower interior portion.

Alternatively, a bottom section of the upper interior portion is configured for introduction of the pre-heated hydrogen containing reducing agent, which pre-heated hydrogen containing reducing agent is adapted to react with (reduce) the metal oxide material holding the thermal energy.

Alternatively, the hydrogen containing reducing agent is introduced into the bottom section of the upper interior portion.

Alternatively, the reduction facility is configured for permitting the reduced metal material to descend into the lower interior portion and/or into the intermediate interior portion for providing the heat treatment process for heat treatment of the reduced metal material making use of additional thermal energy provided by the pre-heated hydrogen containing reducing agent.

Alternatively, the additional thermal energy is defined as thermal energy that is added to thermal energy of the metal oxide material holding thermal energy and/or as thermal energy that is added to the thermal energy of the reduced metal material descending through the intermediate interior portion and/or the lower interior portion.

Alternatively, the reduction facility is configured for permitting the reduced metal material to descend into the lower interior portion and/or into the intermediate interior portion for providing the heat treatment process for heat treatment of the reduced metal material making use of additional thermal energy provided by the pre-heated hydrogen containing reducing agent.

Alternatively, the additional thermal energy is defined as thermal energy that is added to thermal energy of the metal oxide material holding thermal energy and/or as thermal energy that is added to the still not utilized thermal energy of the reduced metal material descending through the intermediate interior portion and/or the lower interior portion.

Alternatively, the control circuitry is configured to control the additional thermal energy by adjusting the temperature of the introduced pre-heated hydrogen containing reducing agent for providing the at least one desired passivation parameter value of the reduced metal material.

Alternatively, the additional thermal energy provided by the introduced pre-heated hydrogen containing reducing agent is adapted by the control circuitry by controlling the temperature of the reduced metal oxide material in the intermediate interior portion and/or lower interior portion toward the pre-determined temperature for providing sintering and/or sintering and/or heat treatment of the reduced metal oxide material during a pre-determined time period.

Alternatively, the temperature of the introduced pre-heated hydrogen containing reducing agent is controlled by the control circuitry to maintain the reduced metal material in the intermediate interior portion and/or in the lower interior portion at elevated pre-determined temperature during an extended time period for achieving the heat treatment process.

In such way the reduced metal material is resistant to re-oxidation and/or degradation.

In such way is achieved that the reduced metal material discharged from the reduction facility forms an intermediate product that is resistant to re-oxidation.

In such way is achieved that the intermediate product does not need to be resistant to re-oxidation, which in turn promotes cost-efficient transport to a steel making industry.

In such way is achieved that the intermediate product can be used in the production of steel making use of e.g. an electric arc furnace (EAF) for cost-efficient production.

In such way is achieved that scrap metal can be re-used for production of steel, despite high content of carbon in the scrap metal.

Alternatively, the temperature of the introduced pre-heated hydrogen containing reducing agent, providing the first thermal energy,

Alternatively, the control circuitry is adapted to control the additional thermal energy by adjusting the temperature of the introduced pre-heated hydrogen containing reducing agent.

Alternatively, the temperature of the introduced pre-heated hydrogen containing reducing agent is controlled to be within the range of 100-400 °C, preferably 200-300 °C; or 0-300 °C, preferably 100-200 °C.

Alternatively, the temperature of the introduced pre-heated hydrogen containing reducing agent is controlled to be within the range of 300-600 °C, preferably 400-500 °C.

Alternatively, the control circuitry is adapted to control the thermal energy in such way that the thermal energy decreases the farther down the metal oxide material descends in the upper interior portion.

Alternatively, the control circuitry is adapted to control the thermal energy in such way that the thermal energy decreases the farther down the reduced metal material descends in the intermediate interior portion and/or lower interior portion.

Alternatively, the control circuitry is adapted to control the temperature of the introduced pre-heated hydrogen containing reducing agent in such way that the temperature of the introduced pre-heated hydrogen containing reducing agent increases the farther up the introduced pre-heated hydrogen containing reducing agent ascends in the upper interior portion.

Alternatively, the control circuitry is adapted to control the temperature of the introduced pre-heated hydrogen containing reducing agent in such way that the thermal energy decreases the farther down the reduced metal material descends in the intermediate interior portion and/or lower interior portion.

Alternatively, the control circuitry is adapted to provide that the additional thermal energy decreases the farther down the reduced metal material descends in the intermediate interior portion and/or into the lower interior portion.

Alternatively, the control circuitry is adapted to control the temperature of the introduced pre-heated hydrogen containing reducing agent and/or the temperature of the metal oxide material holding thermal energy for achieving that the temperature in the upper interior portion does not descend below a specific temperature required for reduction of the metal oxide material in the upper interior portion.

In such way is guaranteed that the reduction making use of the thermal energy of the metal oxide material takes place efficiently, wherein the reduction potential of the pre-heated hydrogen containing reducing agent is maintained when introduced.

In such way the thermal energy of the metal oxide material can be used to a great extent by its high content of thermal energy, and advantageously used in a top section of the upper interior portion, where the metal oxide material holding thermal energy initially meets the pre-heated hydrogen containing reducing agent comprising consumed reduction potential (low reduction ability), which consumption of reduction potential of the pre-heated hydrogen containing reducing agent is due to the fact that the metal oxide material holding thermal energy descending through the upper interior portion, and meeting the upwardly streaming pre-heated hydrogen containing gas, is subject to reduction consuming the reduction potential.

Alternatively, the control circuitry is adapted to control the temperature of the pre-heated hydrogen containing reducing agent such that consumption of the reduction potential of the pre-heated hydrogen containing reducing agent during the reduction is performed to such extent that the pre-heated hydrogen reducing agent in the top section comprises a low content of hydrogen and high content of water steam (meaning that covalent bonds holding together hydrogen and oxygen generating water steam, and the remaining hydrogen of the hydrogen containing reducing agent is used for removing the oxygen from the metal oxide material).

It is thus possible to provide an efficient reduction of the metal oxide material holding thermal energy due to the high temperature of the metal oxide material holding thermal energy, which initially being charged into the top section of the upper interior portion.

In such way pure or substantially pure hydrogen can be used for both energy efficient reduction by means of the thermal energy of the charged metal oxide material and for energy efficient heat treatment process for heat treatment of the reduced metal material, wherein the hydrogen containing reducing agent is pre-heated up to a temperature without destroying the reduction potential of the hydrogen.

In such way the temperature of the pre-heated hydrogen containing reducing agent can be adjusted for providing the temperature needed for efficient reduction in the upper interior portion.

In such way the temperature of the pre-heated hydrogen containing reducing agent can be adjusted for providing the temperature needed for efficient adjustment of the chemical reaction and/or the heat treatment process in the intermediate interior portion and/or lower interior portion for providing at least one desired passivation parameter value of the reduced metal material.

Alternatively, the control circuitry is configured to adjust the temperature of the pre-heated hydrogen containing reducing agent to a pre-determined temperature, for providing the heat treatment process established in the intermediate interior portion and/or lower interior portion, which pre-determined temperature is determined from optimal energy consumption, i.e. actively restricting any superfluously heating of the hydrogen containing reducing agent for saving energy.

Alternatively, the control circuitry is configured to adjust the time period needed for the heat treatment process in respect to optimal energy consumption in the production of reduced metal material, which time period may be determined from the actual temperature of the pre-heated hydrogen containing reducing agent.

In such way is provided energy saving production of reduced metal material.

In such way, the heat treatment process is provided in view of optimal use of energy.

Alternatively, the direct reduction facility comprises a reducing agent inlet device configured to introduce a hydrogen containing reducing agent into the direct reduction facility for providing the reduction of the metal oxide material holding thermal energy.

Alternatively, the introduced pre-heated hydrogen containing reducing agent is regarded as supplement to the hydrogen containing reducing agent introduced into the reducing agent inlet device, which hydrogen containing reducing agent is used for reduction in the direct reduction facility.

Alternatively, the introduced hydrogen containing reducing agent and/or the pre-heated hydrogen containing reducing agent being of such volume that complete reduction of the metal oxide material is achieved, providing an excess volume of hydrogen containing reducing agent in the reduction facility for providing said reduction of the metal oxide material and/or the heat treatment of the reduced metal material.

Alternatively, the metal oxide material holding thermal energy is formed as agglomerates being further sintered in the upper interior portion during the reduction of the metal oxide material.

Alternatively, the reduced and sintered agglomerates transferred into the intermediate interior portion and/or the lower interior portion consist of reduced metal particles bond to each other forming pellets of reduced metal material.

Alternatively, the control circuitry is configured to adjust the temperature of the pre-heated hydrogen containing reducing agent to provide the pre-determined time period for sintering the pellets and/or heat treatment of the pellets of reduced metal material in the intermediate interior portion and/or the lower interior portion for providing the at least one desired passivation parameter value of the reduced metal material.

In such way is achieved that the reduced metal material can be subjected to further sintering treatment and/or heat treatment of the reduced metal material in the intermediate interior portion and/or lower interior portion.

Alternatively, the reduced iron ore material is discharged from the reduction facility in the form of compact iron bodies (iron balls or iron pellets or so called iron drops) of reduced iron ore material, each pellet having a compact and dense structure for producing an intermediate product that is resistant to re-oxidation.

Alternatively, the metal oxide material holding thermal energy is permitted to substantially continuously descend in the upper interior portion and in contact with the pre-heated hydrogen containing reducing agent, for reduction of the metal oxide material.

Alternatively, the reduced metal material is permitted to substantially continuously descend in the intermediate interior portion and/or lower interior portion and in contact with the pre-heated hydrogen containing reducing agent.

Alternatively, the pre-heated hydrogen containing reducing agent in the intermediate interior portion and/or lower interior portion is used for providing semi-molten melt and/or melting and/or sintering the reduced iron ore material, wherein iron atoms of the reduced iron ore material are arranged in body-centered cubic pattern.

Alternatively, the temperature of the pre-heated hydrogen containing reducing agent introduced into the upper interior portion is controlled by the control circuitry to provide that a waste reduction fluid produced by the reduction contains 100 % water steam or substantially 100% water steam.

Alternatively, the direct reduction facility further comprises a waste reduction fluid outlet device configured for discharging waste reduction fluid, such as water steam and hydrogen gas, from the reduction facility.

Alternatively, the control circuitry is adapted to control the waste reduction fluid outlet device for withdrawal of the waste reduction fluid from the reduction facility.

Alternatively, the control circuitry is adapted for controlling the temperature of the chemical reaction by coarse adjustment of the thermal energy provided by the metal oxide material provider unit and by fine adjustment of the temperature needed for the chemical reaction and/or the heat treatment process by controlling the temperature of the introduced pre-heated hydrogen containing reducing agent.

These or at least one of said objects has been achieved by a metal material production configuration according to appended claims 8-10.

Alternatively, the reduction facility comprises a passivation parameter detector configured for detection of an actual passivation parameter value.

Alternatively, the passivation parameter detector comprises a laser based surface detector, a density detector, an X-ray detector and/or other types of detectors, etc.

Alternatively, the control circuitry is electrically coupled to the metal oxide material provider unit and is adapted for controlling the temperature of the metal oxide material to be charged into the upper interior portion for providing the chemical reaction between the pre-heated hydrogen containing reducing agent and the metal oxide material.

Alternatively, the metal oxide material provider unit is configured for providing the metal oxide material holding thermal energy, wherein the metal oxide material is formed as agglomerates holding thermal energy that originates from a heating process provided by the metal oxide material provider unit.

Alternatively, the control circuitry controls the temperature of the introduced pre-heated hydrogen containing reduction agent for providing sintering of the outer surface of the individual agglomerate and/or the entire agglomerate.

Alternatively, the intermediate interior portion and/or lower interior portion is configured for receiving the reduced metal material and is configured for providing a heat treatment process for hardening the reduced metal material making use of a hardening process for heat treatment of the reduced metal material making use of additional thermal energy provided by the introduced pre-heated hydrogen containing reducing agent.

Alternatively, the control unit is adapted for controlling the temperature of the introduced pre-heated hydrogen containing reducing agent and is configured to adapt the temperature toward a pre-determined temperature for providing sintering of the metal oxide material subject to reduction and/or sintering and/or heat treatment of the reduced metal material during a pre-determined time period.

In such way is achieved that the iron ore oxide material is prevented from having a tendency to revert back to an oxide state when exposed to natural environments and reduces the risk for spontaneous ignition process.

Alternatively, the control unit is adapted for controlling the amount of the additional thermal energy by controlling the temperature of the introduced pre-heated hydrogen containing reducing agent and/or by controlling the temperature of the metal oxide material charged into the upper interior portion by controlling the metal oxide material provider unit.

Alternatively, the intermediate interior portion and/or lower interior portion of the reduction facility configured for the heat treatment process being separate units or one single unit coupled to a reduction zone of an apparatus having similar configuration as the upper interior portion adapted to receive the metal oxide material holding thermal energy and introduced pre-heated hydrogen containing reducing agent.

Alternatively, the control circuitry is adapted to control the temperature of the pre-heated-hydrogen containing reducing agent for controlling the heat treatment process in a heat treatment zone of the reduction facility and/or of the separate units or the single unit.

Alternatively, the control circuitry is adapted to control the interior gas pressure in the upper interior portion and/or intermediate interior portion and/or lower interior portion of the reduction facility.

Alternatively, the heat treatment process comprises thermal briquetting of the metal oxide material and/or the reduced metal material by controlling the temperature of the introduced pre-heated hydrogen containing reducing agent for providing at least one desired passivation parameter value of the reduced metal material.

Alternatively, the control circuitry is electrically coupled to a passivation parameter value sensor device configured to detect the at least one desired passivation parameter value of the reduced metal material.

Alternatively, the control circuitry is configured to control the temperature of the metal oxide material to be charged into the upper interior portion for controlling the heat treatment process toward a specific heat treatment temperature value that is determined from the at least one desired passivation parameter value of the reduced metal material, wherein the control circuitry takes into account the actual temperature of the metal oxide material to be charged for reaching the specific heat treatment temperature value.

Alternatively, the control circuitry is configured to control the temperature of the metal oxide material charged into the direct reduction facility.

Alternatively, the reduced and sintered agglomerates transferred into the intermediate interior portion and/or the lower interior portion consist of reduced metal particles bond to each other forming pellets of reduced metal material.

In such way is achieved that the reduced iron ore material (such as sponge iron, e.g. pellets, briquettes, balls, iron drops etc.) will form a dense reduced iron material body, optionally having an outer structural feature having higher density than the core of a pellet body, promoting cost-effective transport and preventing spontaneous ignition of the reduced iron material.

The word "metal" may mean a metal ore or be replaced by "iron ore", which iron ore may comprise other elements and/or minerals than iron, such as natural alloy elements or minerals of less quantity not constituting alloys.

The wording "iron ore" may mean iron ore including introduced additives such as quartzite, silicon, lime etc.

The wording "reduction facility" may be changed to "direct reduction facility".

The wording "heat treatment" may be changed to the wording "heat hardening".

The definition of "sintering" may mean a heat treatment process in which aggregate reduced metal material is subjected to a sufficiently high temperature and/or pressure providing a compact and solid reduced metal material piece or pellet.

Alternatively, a portion of the hydrogen containing reducing agent is cooled down before being introduced into a bottom section of the lower interior portion.

Alternatively, a cool hydrogen containing reducing agent is introduced into a bottom section of the lower interior portion.

In such way is achieved that the reduced metal material is cooled down by a cooling process in the direct reduction facility before being discharged from the reduction facility, whereas the hydrogen containing reducing agent for cooling will be heated and whereas heat recovered from the reduced metal material can be re-used for the reduction and the heat treatment process.

Alternatively, the heat recovered from the reduced metal material by the cooling process ascends upward in the direct reduction facility for adding heat to the reduction and/or heat treatment process in a recirculating heat system.

Alternatively, the position of introduction of the introduced pre-heated hydrogen containing reducing agent into the direct reduction facility is adjustable vertically along the prolongation of the direct reduction facility for controlling the heat treatment process for achieving optimal sintering and producing a compact and solid reduced metal material piece or pellet.

Alternatively, the introduced hydrogen containing reducing agent being introduced into the reduction facility via a reducing agent inlet device comprising at least one reducing agent inlet of the reduction facility.

Alternatively, the reducing agent inlet device comprises at least two reducing agent inlets, at least one of which is configured to introduce a supplementary hydrogen containing reducing agent into the reduction facility for providing the heat treatment process.

Alternatively, the heat treatment comprises heat hardening of the metal oxide material subject to reduction and/or the reduced metal material.

Alternatively, the heat treatment comprises a heat hardening process, which heat hardening process involves sintering of the reduced metal material and/or shrinkage of the reduced metal material and/or densification of the reduced metal material

Alternatively, the metal oxide material provider unit may comprise a metal oxide pelletizing plant or metal oxide pre-heating plant.

Alternatively, the reduction of a metal oxide material holding thermal energy into a reduced metal material makes use of the thermal energy of the metal oxide material, wherein the thermal energy is utilized to heat or further heat the introduced hydrogen containing reducing agent and/or the reduction process for providing a chemical reaction between the hydrogen containing reducing agent and the metal oxide material.

Alternatively, the temperature of the chemical process for reduction is higher than 570 °C or being within the range of 600-1500 °C, preferably 750-1350 °C.

Alternatively, the temperature of the chemical process for reduction being within the range of 700-1400 °C, preferably 800-1300 °C.

Alternatively, the temperature of the introduced hydrogen containing reducing agent is controlled for providing adjustment of the heat treatment process, the temperature of which is adapted to be at a pre-determined temperature value for providing the heat treatment process for reaching at least one desired passivation parameter value of the reduced metal material.

Alternatively, the pre-determined temperature is adapted to be within the range of 200-600 °C, preferably 300-500 °C for providing at least one desired passivation parameter value of the reduced metal material.

Alternatively, the pre-determined temperature is provided during a pre-determined time period sufficient long to enable the heat treatment process for providing at least one desired passivation parameter value of the reduced metal material.

Alternatively, the at least one desired passivation parameter value may regard a porosity parameter and/or a dimension parameter and/or a weight parameter and/or a metal particle structure parameter and/or a sample cut evenness parameter and/or a shrinkage parameter and/or a sintering parameter and/or a Cold Crushing Strength parameter etc.

Alternatively, the metal oxide material holding thermal energy is transferred from the upper interior portion to the intermediate and/or the lower portion by means of gravity force.

Alternatively, the reducing agent temperature adjusting device may comprise an electrolysis unit or is part of the electrolysis unit adapted to adjust the temperature of the introduced hydrogen containing reducing agent, which electrolysis unit is electrically coupled to the control circuitry.

Alternatively, the reducing agent temperature adjusting device may comprise a reducing agent pre-heating device adapted to adjust the temperature of the introduced hydrogen containing reducing agent, which reducing agent pre-heating device is electrically coupled to the control circuitry.

Alternatively, the reducing agent temperature adjusting device is further being configured to cool down the hydrogen containing reducing agent to be introduced into the intermediate portion and/or a lower interior portion of the reduction facility via the reducing agent inlet device.

Alternatively, the method comprises the step of reducing the metal oxide material in the upper interior portion by utilizing the thermal energy of the metal oxide material to heat or further heat the introduced pre-heated hydrogen containing reducing agent for providing a chemical reaction between the pre-heated hydrogen containing reducing agent and the metal oxide material.

Alternatively, the reducing agent inlet device configured to introduce a pre-heated hydrogen containing reducing agent into the intermediate interior portion and/or lower interior portion of the reduction facility, whereby the pre-heated hydrogen containing reducing agent is adapted to react with the metal oxide material holding thermal energy for reducing the metal oxide material by utilizing the thermal energy of the metal oxide material to heat or further heat the introduced pre-heated hydrogen containing reducing agent for providing a chemical reaction between the pre-heated hydrogen containing reducing agent and the metal oxide material.

Alternatively, the control circuitry, electrically coupled to a reducing agent pre-heating device configured to pre-heat the hydrogen containing reducing agent, is adapted for controlling the temperature of the introduced pre-heated hydrogen containing reducing agent for reaching at least one desired passivation parameter value of the reduced metal material.

Alternatively, the introduced pre-heated hydrogen containing reducing agent (pre-heated or cooled down) comprises 80-100 % hydrogen, preferably 90-95 % hydrogen by volume.

Alternatively, the introduced pre-heated hydrogen containing reducing agent (pre-heated or cooled down) comprises 70-95 % hydrogen, preferably 80-90 % hydrogen by volume.

Alternatively, the substantially or completely endothermal chemical reaction may consume thermal energy equivalent to about 475 - 525 °C, preferably about 500 °C, which energy is extracted from the metal oxide material holding the thermal energy during the reduction and chemical reaction performed in the direct reduction facility.

Alternatively, the control circuitry is configured to control the time during which the metal oxide material flows through the intermediate interior portion and/or the lower interior portion of the reduction facility, by means of mechanical means, pressurizing, design of reduction shaft and heat treatment shaft.

These or at least one of said objects has been achieved by a data program, programmed for causing the metal material production configuration to execute the method according to the enclosed claims.

It has been shown that it is beneficial to make use of the present disclosure by the fact that the chemical reactivity and/or high impetus of the hydrogen of the hydrogen containing reducing agent H is maintained when introduced into the direct reduction facility.

Alternatively, the reduction facility is coupled to a metal oxide pre-heating plant for pre-heating the metal oxide material.

An iron drop may be defined as a small, round, pear, droplet, globule, bead, spheroid or oval shaped body of passivated reduced iron ore material and/or metal material having a compact and dense structure for producing an intermediate product that is resistant to re-oxidation.

Alternatively, the reducing agent to be introduced and/or being introduced into the direct reduction facility has a gas temperature pre-determined and/or controlled and/or selected by the control circuitry to be any temperature between the range about 600-1000°C or about 500-900°C or about 700-1200°C.

Alternatively, the introduced reducing agent, ascending upward in the direct reduction facility, meets the direct reduced iron ore material and/or the iron ore oxide material subject to direct reduction, which descend/-s in the direct reduction facility.

Alternatively, the gas temperature of the reducing agent is provided for decreasing the cooling rate of the direct reduced metal material and/or the metal oxide material subject to direct reduction descending through the direct reduction facility.

Alternatively, the reduction potential of the reducing agent ascending in the upper interior portion may be lower than that of the reducing agent introduced farther down in the direct reduction facility (i.e. intermediate and/or lower interior portion), since the reducing agent contains a higher degree of water steam in the upper interior portion than in the intermediate and/or lower interior portion.

Alternatively, material temperature (e.g. any temperature between the range about 50°C to about 350 °C or about 100°C to about 400 °C) of the metal oxide material to be charged and/or being charged into the direct reduction facility meets the reducing agent in the upper interior portion.

Alternatively, a part of the hydrogen has been used for the chemical reaction in the intermediate and/or lower interior portion.

Alternatively, the metal oxide material holding the thermal energy provides at least a part of the thermal energy necessary for said chemical reaction between the metal oxide material and the reducing agent in the upper interior portion of the direct reduction facility.

Alternatively, the metal oxide material holding the thermal energy to at least some extent further heats the reducing agent in the upper interior portion.

Thereby is achieved an energy saving process for direct reduction of metal oxide material by means of hydrogen and/or hydrogen containing reducing agent, the hydrogen of which preferably may be temporarily stored in a gas storing tank and/or in a storage facility of a geological repository and/or in other buffer facilities, so that hydrogen of the reducing agent is available and can be used when re-generative energy is not sufficiently produced, e.g. for meeting fluctuations in production of re-generatively generated electric energy.

The present invention may relate to a process for producing steel, whereby metal oxide material is reduced with a reducing agent, such as a hydrogen containing reducing agent, in a direct reduction facility and the so-obtained intermediate product of direct reduced metal material and eventually accompanying substances is/are metallurgically processed; the reducing agent is produced by electrolysis of water by means of an electrolysis unit, such as a high temperature electrolysis unit, the electric energy necessary for the electrolysis may be re-generative energy which is derived from hydropower and/or wind power and/or photovoltaic and/or other re-generative energy forms and/or a nuclear plant, such as a plant comprising a small modular reactor SMR, wherein produced reduced metal material, such as sponge iron, so called an intermediate product, is produced independently of the current demand, if sufficient reducing agent is available.

Alternatively, the metal oxide material is transferred from a metal oxide material provider device, such as a pelletizing plant and/or a pre-heating apparatus, into the direct reduction facility and holds thermal energy that originates from the metal oxide material provider device.

Alternatively, the direct reduction facility is configured for introduction of the reducing agent adapted to react with the metal oxide material holding thermal energy, thus reducing the metal oxide material into the intermediate product by utilizing the thermal energy of the metal oxide material to further heat the introduced reducing agent for achieving a chemical reaction between the metal oxide material and the reducing agent, for providing an energy saving and time saving process.

**The hydrogen** of the hydrogen containing reducing agent and/or the hydrogen containing reducing agent may be stored in a gas storing tank and/or in a storage facility of a geological repository and/or in other buffer facilities.

The gas storing tank or the storage facility in geological repository may be located between the electrolysis unit and/or the high temperature electrolysis unit and the direct reduction facility.

Alternatively, the reducing agent may be pre-heated before being introduced into the direct reduction facility so that the reducing agent, besides providing the direct reduction and/or chemical reaction, also decreases the cooling rate of the direct reduced metal material and/or the metal oxide material subject to direct reduction descending downward through the direct reduction facility.

The temperature of the metal oxide material to be charged into the upper interior portion of the direct reduction facility may be higher than the temperature of the reducing agent to be introduced and/or being introduced into the direct reduction facility.

The temperature of the metal oxide material to be charged into the upper interior portion of the direct reduction facility may be lower than the temperature of the reducing agent to be introduced and/or being introduced into the direct reduction facility.

The temperature of the metal oxide material to be charged into the direct reduction facility may have a material temperature of about 50°C to about 350 °C or about 100°C to about 400 °C or about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

The reducing agent may be pre-heated before introduction into the direct reduction facility and/or when introduced into the direct reduction facility to a gas temperature of about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

By introducing a reducing agent with higher gas temperature (e.g. about 600 °C to 900 °C) into the direct reduction facility it is achieved that the metal oxide material, holding thermal energy, reaching the intermediate portion and/or the lower interior portion of the direct reduction facility and being subjected for direct reduction and/or the heat treatment, decreases the cooling rate of the direct reduced metal material and/or the metal oxide material subject to direct reduction in the intermediate portion and/or the lower interior portion of the direct reduction facility.

The heat treatment is thus performed efficiently and the passivated and reduced metal material having a compact and dense structure provides an intermediate product that is resistant to re-oxidation.

The intermediate product may be defined as a small, round, pear, droplet, globule, bead, spheroid or oval shaped body of passivated reduced metal material having a compact and dense structure for producing an intermediate product that is resistant to re-oxidation.

Alternatively, the direct reduction facility is configured for permitting the reduced metal material to descend into the lower interior portion and/or into the intermediate interior portion for providing the heat treatment process for efficient heat treatment of the reduced metal material making use of the reducing agent with higher temperature providing additional thermal energy (additional thermal energy which is additional to the thermal energy of the metal oxide material) for decreasing the cooling rate of the metal material subject to direct reduction and/or heat treatment.

A control circuitry is coupled to an metal oxide pre-heating plant and/or heating device and is configured to control the material temperature of the metal oxide material to be charged, such that the metal oxide material subject to reduction and/or heat treatment is maintained (regulated to be increased/decreased) at a pre-determined temperature of about 200-600 °C, preferably about 300-500 °C, during a pre-determined time period sufficient long to enable the heat treatment process providing said desired passivation parameter value of the reduced metal material, which in turn obtains that the intermediate product become resistant to re-oxidation.

Alternatively, the control circuitry is further coupled to a reducing agent pre-heating device configured to pre-heat the reducing agent before introduction into the direct reduction facility and is configured to control the gas temperature of the reducing agent such that the metal oxide material subject to reduction and/or heat treatment is maintained (regulated to be increased/decreased) toward a pre-determined temperature of about 200-600 °C, preferably about 300-500 °C, during a pre-determined time period sufficient long to enable the heat treatment process providing said desired passivation parameter value of the reduced metal material, which in turn obtains that the intermediate product become resistant to re-oxidation.

Alternatively, the pre-determined temperature is about 400-800 °C, preferably about 500-700 °C.

Alternatively, the pre-determined temperature is about 600-1000 °C, preferably about 700-900 °C.

Alternatively, the desired passivation parameter value may defined as a value of the rate and/or degree and/or grade and/or quota and/or proportion of re-oxidation of the intermediate product (sponge iron and/or reduced iron ore material).

Alternatively, the control circuitry may be adapted to control the temperature of the metal oxide material holding thermal energy toward the pre-determined temperature for providing the heat treatment process in the direct reduction facility for heat treatment of the metal oxide material subject to reduction during a pre-determined time period, thereby reaching a desired passivation parameter value regarding porosity and/or a sponge iron dimension and/or weight per volume of produced sponge iron and/or metal particle structure and/or sample cut evenness and/or shrinkage and/or sintering and/or Cold Crushing Strength etc.

The desired passivation parameter value regarding porosity, the definition of which can be expressed as the ratio of pore volume of the produced sponge iron to its total volume. The sponge iron dimension may be expressed as the average diameter of the generally produced sponge iron agglomerate. The weight per volume may be defined as the measure of the iron concentration of the generally produced sponge iron agglomerate. The metal particle structure may be defined as the final microstructure and distribution of dense and porous regions of the produced sponge iron agglomerate. The sample cut evenness may define the density of the produced sponge iron agglomerate.

The heat treatment process, provided by means of the control circuitry during a pre-determined time period, thereby reaching the desired passivation parameter of the produced sponge iron, causes a sponge iron or intermediate product that has a dense structure and/or high uniformity of eventual porosity in specific regions (such as central region of the sponge iron agglomerate) and/or high uniform chemical composition for cost effective and energy saving production in subsequent steel production in steel plants and resistant to re-oxidation.

Alternatively, the high material temperature (e.g. any temperature between the range about 600 °C to about 900 °C or about 700 °C to about 1000 °C or about 800 °C to about 1100 °C or about 900 °C to about 1200 °C or higher) of the metal oxide material to be charged and/or being charged into the direct reduction facility meets the reducing agent.

Alternatively, a part of the hydrogen has been used for the chemical reaction in the intermediate portion and/or the lower interior portion.

Alternatively, the high material temperature of the metal oxide material charged in the upper interior portion of the reduction facility provides a part of thermal energy for said chemical reaction and generates high-temperature top gas comprising high temperature water steam to be used in a high temperature electrolysis unit.

Alternatively, the metal oxide material subject to direct reduction and/or the direct reduced metal material in intermediate portion and/or the lower interior portion is subject to said heat treatment process.

In such way is achieved efficient treatment and energy saving re-cycling of high-temperature water steam of the top gas, generated by the chemical reaction supported by the high temperature charged metal oxide material, which high-temperature water steam fed to the high-temperature electrolysis unit, and thus providing that the high-temperature electrolysis unit is able to operate energy efficient due to an efficient heat recovery of the high-temperature water steam and due to the high content of high-temperature water steam of the top gas discharged from the direct reduction facility.

Alternatively, a high-temperature electrolysis unit is configured to produce hydrogen and the metal oxide material provider unit is configured to provide the metal oxide material holding the thermal energy.

Alternatively, the direct reduction facility comprises an metal oxide material charging inlet device, a reducing agent inlet device configured to introduce the hydrogen containing reducing agent holding an additional thermal energy.

Alternatively, the control circuitry is configured to control the direct reduction of the metal oxide material by adjusting the temperature of the charged metal oxide material and introduced hydrogen containing reducing agent.

Alternatively, the metal material production configuration is adapted to reduce the metal oxide material by using at least a part of the thermal energy of the metal oxide material charged into the direct reduction facility to further heat the introduced hydrogen containing reducing agent toward a required reaction temperature of the chemical reaction for providing the chemical reaction between the hydrogen containing reducing agent and the metal oxide material.

Alternatively, the direct reduction facility comprises a gas outlet device configured for removing a high-temperature exit gas (top gas) from the upper interior portion of the direct reduction facility.

Alternatively, the metal material production configuration comprises a first fluid line arrangement configured for fluid communication and adapted to feed a high-temperature water steam of the high-temperature exit gas to the high-temperature electrolysis unit.

Alternatively, a second fluid line arrangement is configured for fluid communication and adapted to feed hydrogen (produced by the high-temperature electrolysis unit) from the high-temperature electrolysis unit to the direct reduction facility.

In such way is achieved an high content of high-temperature water steam of the high-temperature exit gas , which promotes efficient utilization of the high-temperature water steam injected into the high-temperature electrolysis unit.

Alternatively, the upper interior portion is configured for enabling a required reaction temperature that is higher than the required reaction temperature provided by the lower interior portion.

Alternatively, the metal oxide material holding thermal energy being charged into the direct reduction facility exhibits a temperature of 1000 °C to about 1450 °C, preferably about 1100 °C to about 1300 °C.

Alternatively, the method comprises the step of providing the high-temperature exit gas (top gas) from in the upper interior portion by means of charging the metal oxide material holding the thermal energy into the upper interior portion for causing the chemical reaction between the metal oxide material and the hydrogen containing reducing agent.

In such a way, an endothermal chemical reaction is able to take place in the upper interior portion between the metal oxide material and the hydrogen containing reducing agent, despite the fact that the hydrogen containing reducing agent may comprise high content of water steam generated by the chemical reaction.

By means of the high-temperature of the charged metal oxide material holding the thermal energy, it is achieved that the high-temperature exit gas (top gas) produced in the upper interior portion comprises high-temperature water steam, due to high-temperature transfer from the charged metal oxide material further heating the hydrogen containing reducing agent that has ascended to the upper interior portion providing said (endothermal) chemical reaction.

Alternatively, the high-temperature exit gas contains up to about 80-100 vol. %, preferably about 85-95 vol. %, high-temperature water steam.

Alternatively, the high-temperature exit gas contains up to about 60-90 vol. %, preferably about 70-80 vol. %, high-temperature water steam.

Alternatively, the high-temperature exit gas contains up to about 40-80 vol. %, preferably about 50-70 vol. %, high-temperature water steam.

Alternatively, the high-temperature exit gas contains up to about 20-60 vol. %, preferably about 30-40 vol. %, high-temperature water steam.

Alternatively, the high-temperature exit gas contains up to about 10-30 vol. %, preferably about 15-20 vol. %, high-temperature water steam.

Alternatively, the high-temperature exit gas (top gas) comprises the high-temperature water steam and an excess hydrogen gas.

Alternatively, the excess hydrogen gas is separated from the high-temperature exit gas and is re-circulated to the direct reduction facility and introduced into the direct reduction facility for providing the direct reduction in the direct reduction facility.

Alternatively, the metal material production configuration comprises a top gas recycling arrangement adapted to recycle the excess hydrogen gas of the high-temperature exit gas and adding it to the hydrogen produced by the high temperature electrolysis unit.

Alternatively, a carbon containing gas is added to the reducing agent in order to incorporate carbon into the intermediate product.

Alternatively, at least so much carbon containing gas is added to the reducing agent so that the intermediate product comprises carbon.

Alternatively, the carbon containing gas comprises methane and/or other carbon-containing gas from biogas production and/or carbon-containing gas from pyrolysis of renewable raw materials and/or synthetic gas from biomass.

Alternatively, the reducing agent configured for the direct reduction comprises at least enough carbon-containing gas added to it for providing the intermediate product comprising carbon.

Alternatively, the reducing agent comprises hydrogen configured for direct reduction of the metal oxide material and for providing the chemical transformation of the metal oxide material into the carbon-free intermediate product.

Alternatively, the reducing agent (e.g. composed of hydrogen and possibly comprising a carbon-containing gas) is introduced into the reduction process at a temperature lower and/or higher than that of the metal oxide material being charged into the direct reduction facility.

Alternatively, the reducing agent may be pre-heated to some extent before being introduced into the direct reduction facility, wherein the introduced reducing agent may have a temperature of about 300 °C to about 700 °C, preferably about 400 °C to about 650 °C.

Alternatively, a carbon containing substance extracted from a carbon source is added to the direct reduced metal material in a separate carburizing zone of the direct reduction facility and/or in a separate carburizing reactor configured for introducing carbon into the metal oxide material for providing the intermediate product discharged from the direct reduction facility or a separate carburizing reactor.

Alternatively, the carbon containing substance comprises pure carbon or being an element of molecules, such as methane, propane or other hydrocarbon or other molecules.

Alternatively, the carbon production unit comprises a Sabatier reactor producing methane CH4 from a reaction between Hydrogen H2 and Carbon Dioxide CO2, which methane CH4 being the carbon- or hydrogen-containing gas transferred to the separate carburizing zone and/or to the separate carburizing reactor.

Alternatively, the carbon production unit and/or the carbon capture and utilization unit and/or the biogas production unit and/or the synthetic gas production unit is/are incorporated as integrated unit/s of the pre-heating apparatus and/or the metal production unit and/or the direct reduction facility and/or the electrolysis unit.

Alternatively, the carbon production unit comprises a Fischer-Tropsch apparatus configured to produce a carbon containing product by reducing the methane CH4 produced by the Sabatier reactor, which carbon containing product is transferred to the separate carburizing zone and/or to the separate carburizing reactor .

Alternatively, the carbon capture and utilization unit (CCU) comprises a CO2 capturing device CCD configured for capturing of CO2 from the atmosphere, which captured CO2 may be transferred to said Sabatier reactor configured for production of carbon respective methane CH4.

Alternatively, the carbon production unit configured for production of non-fossil produced carbon is used by a cement industry plant manufacturing cement from mined calcium minerals.

Alternatively, the process comprises the steps of; direct reducing the metal oxide material by means of a reducing agent having a hydrogen content of at least 80% by volume; wherein a carbon content in the direct reduced metal material is then increased by means of a carburizing gas, and thereafter used carburizing gas is at least partly taken off while largely avoiding mixing the carburizing gas with the reducing agent.

Alternatively, the reducing agent comprises a hydrogen content of at least about 40-60% by volume or about 50-70% by volume or about 60-80% by volume or about 70-90% by volume.

Alternatively, the carburizing zone corresponds with a separate (insulated) carburizing zone configured for avoiding mixing the carbon containing substance with the reducing agent.

Alternatively, the carburizing zone constitutes a carburizing volume of the interior of the direct reduction facility, which carburizing volume is configured for reduction of the metal oxide material and configured for carburizing the metal oxide material subject to reduction, by mixing the carbon containing substance with the reducing agent.

Alternatively, the carburizing zone constitutes a carburizing volume (not shown) of the interior of the direct reduction facility, which carburizing volume is configured for reduction of the metal oxide material and configured for carburizing the metal oxide material subject to reduction, and mixing the carbon containing substance with the reducing agent.

By utilizing the thermal energy of the metal oxide material to further heat the introduced reducing agent, a chemical reaction between the metal oxide material and the reducing agent is achieved in an energy efficient manner.

Alternatively, the control circuitry is adapted to control the metal oxide material temperature of the metal oxide material transferred into the direct reduction facility and/or to control the interior gas pressure in the direct reduction facility and/or the reducing agent temperature and/or the reducing agent gas pressure of the introduced reducing agent, for reaching the pre-determined temperature of the metal oxide material subject to reduction and/or heat treatment.

Alternatively, the direct reduction facility is configured to be charged with an metal oxide material having a temperature within the range of about 600 to 1500 °C.

Alternatively, the direct reduction facility is configured to be charged with an metal oxide material having a temperature within the range of about 500 °C to 1600 °C, preferably within the range of about 800 °C to 1300 °C.

Alternatively, the reduced metal material consists of reduced iron particles bond to each other forming pellets of heat treated and/or heat hardened and/or passivated reduced iron material in the form of iron drops.

Thereby an intermediate product (reduced iron material) ("iron drop/iron drip)") is achieved which is suitable for the production of steel, whereby environmental (carbon free/low carbon) production is achieved at the same time as safe transport to the steel plant is achieved (resistant against re-oxidation).

The produced intermediate product is advantageous since the optimized amount of carbon more exactly can be added in the EAF for achieving the desired steel quality The present disclosure may not be restricted to the examples described above, but many possibilities to modifications, or combinations of the described examples thereof should be apparent to a person with ordinary skill in the art without departing from the basic idea as defined in the appended claims.

### BRIEF DESCRIPTION OF THE DRAWING

Hereinafter, the invention will be described with reference to examples and accompanying schematic drawings, wherein for the sake of clarity and understanding of the invention some details of no importance may be deleted from the drawings.
Fig. 1 illustrates a metal material production configuration adapted for reduction of a metal oxide material according to a first example;
Fig. 2 illustrates a flow diagram provided by a metal material production configuration according to a second example;
Fig. 3 illustrates a metal material production configuration adapted for reduction of a metal oxide material according to a third example;
Fig. 4 illustrates a phase diagram of iron phase domains as a function of oxidizing power of hydrogen gas and temperature;
Fig. 5 illustrates a hydrogen/hydrogen+iron Mol/mol phase diagram relative temperature;
Figs. 6a-6c illustrate iron ore agglomerate structure transferring phases related to the heat treatment process;
Figs. 7a-7b illustrate a metal material production configuration adapted for reduction of a metal oxide material according to a fourth example;
Fig. 8 illustrates a closed loop diagram used by a metal material production configuration according to a fifth example;
Figs. 9a-9b illustrate flowcharts showing exemplary methods of reduction of a metal oxide material holding thermal energy into a reduced metal material;
Fig. 10 illustrates a control circuitry of a metal material production configuration according to a sixth example; and
Fig. 11 illustrates a metal material production configuration adapted for reduction of an iron ore oxide material according to a fifth example.

### DETAILED DESCRIPTION

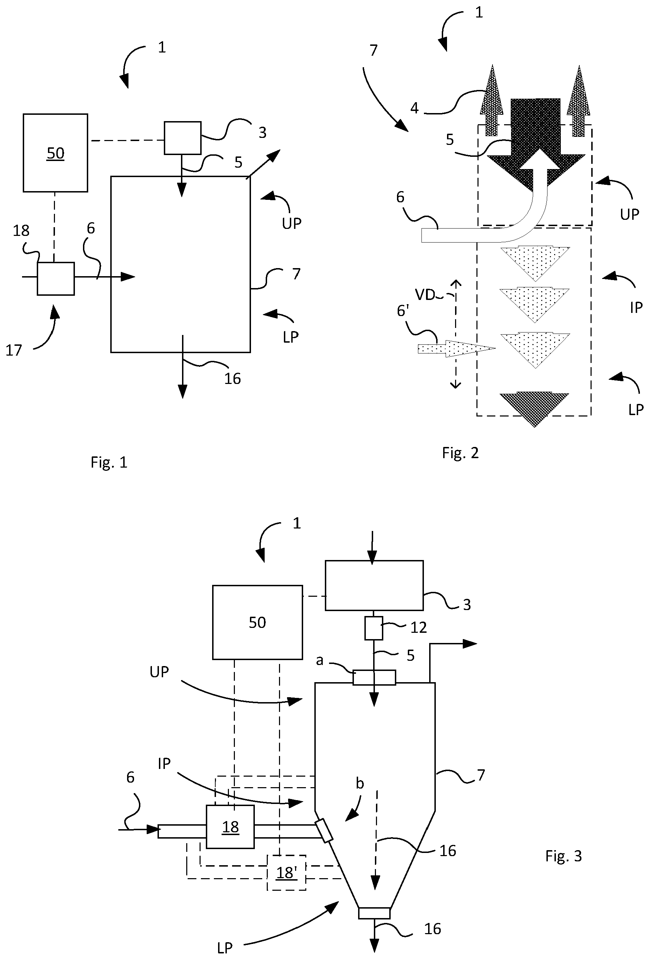

Fig. 1 illustrates a metal material production configuration adapted for reduction of a metal oxide material according to a first example. Fig. 1 illustrates a metal material production configuration 1 adapted for reduction of a metal oxide material 5 holding thermal energy into a reduced metal material 16.

The metal material production configuration 1 comprises a metal oxide material provider unit 3, such as a metal oxide pelletizing plant or metal oxide pre-heating plant, configured for providing the metal oxide material 5 holding thermal energy. The metal material production configuration 1 comprises a reduction facility 7 configured to reduce the metal oxide material 5 holding thermal energy. A metal oxide material charging transfer unit (not shown) of the metal material production configuration 1 is configured to charge the metal oxide material 5 into an upper interior portion UP of the reduction facility 7.

The reduction facility 7 comprises a reducing agent inlet (not shown) configured to introduce a hydrogen containing reducing agent 6 into a lower interior portion of the reduction facility 7, whereby the hydrogen containing reducing agent 6 is adapted to react with the metal oxide material 5 holding thermal energy for reducing the metal oxide material 5 by utilizing the thermal energy of the metal oxide material 5 to heat or further heat the introduced hydrogen containing reducing agent 6 for providing a chemical reaction between the hydrogen containing reducing agent 6 and the metal oxide material 5.

The hydrogen of the hydrogen containing reducing agent 6 may be produced by an electrolysis unit 17, that comprises a reducing agent temperature regulator 18 configured to adjust (pre-heat or cool down) the temperature of the hydrogen containing reducing agent 6.

The reduction facility 7 is configured for providing a heat treatment process for heat treatment of the metal oxide material 5 subject to reduction and/or the reduced metal material 16. The metal material production configuration 1 comprises a control circuitry 50, electrically coupled to the reducing agent temperature regulator 18 to pre-heat the hydrogen containing reducing agent 6.

The control circuitry 50 is adapted for controlling the temperature of the introduced pre-heated hydrogen containing reducing agent 6 for providing at least one desired passivation parameter value of the reduced metal material 16. The control circuitry 50 is electrically coupled to the metal oxide material provider unit 3 and is adapted for controlling the temperature of the metal oxide material to be charged into the upper interior portion UP. The reduced metal material 16 exhibiting the at least one desired passivation parameter value is discharged from the reduction facility 7 and is transported to a steel producer (not shown), whereas the reduced metal material is resistant to re-oxidation due to the passivation of the reduced metal material 16.

The reduction facility 7 is further configured for permitting the reduced metal material 16 to descend into the lower interior portion LP for providing the heat treatment process for heat treatment of the reduced metal material making use of additional thermal energy provided by the hydrogen containing reducing agent. It has been shown that the chemical reactivity and/or high impetus of the hydrogen of the hydrogen containing reducing agent 6 is maintained.

The chemical reactivity and/or high impetus being essential for providing an efficient reduction of the metal oxide material. The introduced hydrogen containing reducing agent 6 comprises 80-100 % hydrogen, preferably 100% hydrogen. The control circuitry 50 is adapted to control the temperature of the introduced pre-heated hydrogen containing reducing agent 6 toward a pre-determined temperature for providing sintering and/or heat treatment of the metal oxide material 5 subject to reduction during a pre-determined time period.

Alternatively, the temperature of the metal oxide material to be charged into the upper interior portion is controlled by the control circuitry to be within the range of 900-1500 °C, preferably 1000-1300 °C.

Alternatively, the temperature of the hydrogen containing reducing agent is controlled by the control circuitry to be within the range of 100-400 °C, preferably 200-300 °C; or 0-300 °C, preferably 100-200 °C.

Fig. 2 illustrates a flow diagram provided by a metal material production configuration 1 according to a second example. A metal oxide material 5 holding thermal energy is charged into a reduction facility 7. The reduction facility 7 may be defined to have an upper interior portion UP, an intermediate interior portion IP and a lower interior portion LP. A hydrogen containing reducing agent 6 is introduced into the intermediate interior portion IP and flows upward meeting the downwardly transferred metal oxide material 5 holding thermal energy, whereby the upper interior portion UP functions as a counter current heat exchange zone for providing a chemical reaction between the metal oxide material and the hydrogen containing reducing agent 6.

Alternatively, the hydrogen containing reducing agent 6 is pre-heated.

Alternatively, the metal oxide material holding thermal energy is transferred from the upper interior portion to the intermediate and/or the lower interior portion by means of gravity.

Alternatively, the temperature of the hydrogen containing reducing agent 6 introduced into the upper interior portion UP is controlled by a control circuitry (not shown) to provide that a waste reduction fluid 4 produced by the reduction contains 100 % water steam or substantially 100% water steam.

Alternatively, the temperature of the hydrogen containing reducing agent 6 introduced into the upper interior portion UP is controlled by a control circuitry (not shown) to provide that a waste reduction fluid 4 produced by the reduction contains more than 90 % water steam and remaining hydrogen containing reducing agent. In such way is achieved excess volume of the hydrogen containing reducing agent and ensuring complete reduction of the metal oxide material.

Due to the high temperature of the charged metal oxide material 5, there is achieved an efficient reduction of the metal oxide material 5 despite the fact that the hydrogen containing reducing agent 6 comprises a large amount of water steam.

An additional introduction of a pre-heated hydrogen containing reducing agent 6' is made in the intermediate interior portion IP and/or the lower interior portion LP. The temperature of the additionally introduced pre-heated hydrogen containing reducing agent 6' is controlled by the control circuitry for adaptation of the temperature toward a pre-determined temperature achieving sintering and/or heat treatment of the reduced metal material 16 during a pre-determined time period for providing the at least one desired passivation parameter value of the reduced metal material 16.

Alternatively, the position of introduction of the introduced pre-heated hydrogen containing reducing agent 6' is adjustable vertically VD along the prolongation of the direct reduction facility 7 for controlling the heat treatment process for achieving optimal sintering and producing a compact and solid reduced metal material piece or pellet.

Fig. 3 illustrates a metal material production configuration 1 adapted for reduction of a metal oxide material 5 holding thermal energy into a reduced metal material 16 according to a third example. The metal material production configuration 1 comprises a metal oxide material provider unit 3, such as a metal oxide pelletizing plant or metal oxide pre-heating plant, configured for providing the metal oxide material 5 holding thermal energy. The metal material production configuration 1 comprises a reduction facility 7 configured to reduce the metal oxide material 5 holding thermal energy.

A metal oxide material charging transfer unit 12 of the metal material production configuration 1 is configured to charge the metal oxide material 5 into an upper interior portion UP of the reduction facility 7 via a metal oxide material charging apparatus a comprising e.g. a transportation fire-proof steel band (not shown) configured to charge the metal oxide material 5 holding thermal energy into a top section of the upper interior portion UP.

The reduction facility 7 comprises a reducing agent inlet b configured to introduce a pre-heated hydrogen containing reducing agent 6 into an intermediate interior portion IP of the reduction facility 7, whereby the pre-heated hydrogen containing reducing agent 6 is adapted to react with the metal oxide material 5 holding thermal energy for reducing the metal oxide material 5 by utilizing the thermal energy of the metal oxide material 5 to heat or further heat the introduced pre-heated hydrogen containing reducing agent 6 for providing a chemical reaction between the pre-heated hydrogen containing reducing agent 6 and the metal oxide material 5. The hydrogen of the pre-heated hydrogen containing reducing agent 6 may be produced by an electrolysis unit (not shown).

The metal oxide material 5 holding thermal energy descends through the upper interior portion UP and successively is reduced into the reduced metal material 16 in the upper interior portion UP. The temperature of the introduced pre-heated hydrogen containing reducing agent 6 increases the farther up the introduced pre-heated hydrogen containing reducing agent 6 ascends in the upper interior portion UP, wherein the metal oxide material 5 holding thermal energy meets the introduced pre-heated hydrogen containing reducing agent 6 and the metal oxide material 5 holding thermal energy is cooled down. The upper interior portion UP functions as a counter current heat exchange zone and promotes the chemical reaction between the metal oxide material and the pre-heated hydrogen containing reducing agent 6.

Furthermore, the intermediate interior portion IP is configured for providing a heat treatment process for heat treatment of the reduced metal material 16 in the intermediate interior portion IP. The reduced metal material 16 descends into the intermediate interior portion IP from the upper interior portion UP.

A control circuitry 50 is electrically coupled to a reducing agent pre-heater 18 configured to pre-heat a hydrogen containing reducing agent 6 to be introduced into the intermediate interior portion IP via the reducing agent inlet b.

The control circuitry 50 controls the temperature of the reduced metal material 16 towards a pre-determined temperature, e.g. set within the range of 200-600 °C, preferably 300-500 °C, during a pre-determined time period sufficient long to enable the heat treatment process for providing at least one desired passivation parameter value of the reduced metal material.

In such way the temperature of the introduced pre-heated hydrogen containing reducing agent 6 is controlled by the control circuitry 50 to maintain the temperature of the reduced metal material 16 in the intermediate interior portion IP at an elevated pre-determined temperature during an extended time period for achieving the heat treatment process.

In such way is achieved that the heat treatment process for heat treatment of the reduced metal material makes use of additional thermal energy provided by the pre-heated hydrogen containing reducing agent 6, wherein the heat treatment process is controlled by the control circuitry 50.

The control circuitry 50 is configured to control the additional thermal energy by adjusting the temperature of the introduced pre-heated hydrogen containing reducing agent in such way that the at least one desired passivation parameter value of the reduced metal material is achieved.

The control circuitry 50 may be electrically coupled to an additional reducing agent pre-heater 18' configured to pre-heat the hydrogen containing reducing agent 6 introduced into a lower interior portion LP of the reduction facility 7.

The introduced pre-heated hydrogen containing reducing agent 6 fed into the lower interior portion LP may comprise 80-100 % hydrogen, preferably 100% hydrogen. The control circuitry 50 is adapted to control the temperature of the introduced pre-heated hydrogen containing reducing agent 6 fed into the lower interior portion LP toward a pre-determined temperature for providing sintering and/or heat treatment of reduced metal material 16 during a pre-determined time period.

Alternatively, the introduced hydrogen containing reducing agent being of such volume that complete reduction of the metal oxide material is achieved, providing an excess volume of hydrogen containing reducing agent in the reduction facility for providing said reduction of the metal oxide material.

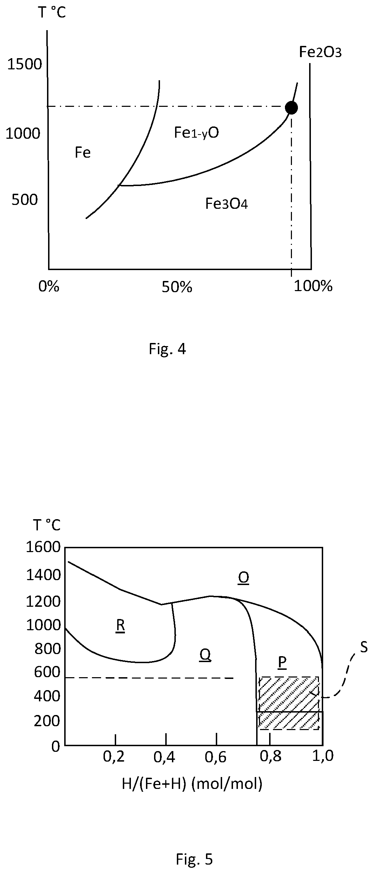

Fig. 4 illustrates a phase diagram of iron phase domains as a function of oxidizing power of hydrogen gas and temperature, for the gas mixture H₂-H₂O. As shown in the diagram, the reduction of the iron ore oxide material in the form of hematite and/or magnetite and/or wüstite into reduced iron ore material, takes place in two or three stages, depending on whether the temperature is above or below 570 °C. In this case, hematite Fe₂O₃ is first reduced to magnetite Fe₃O₄, then to wüstite Fe_{1-Y}O and finally to iron Fe.

The pre-heated hydrogen containing reducing agent 6 introduced into the reduction facility ascends through the upper interior portion and contacts the descending iron ore oxide material under reduction, whereas the pre-heated hydrogen containing reducing agent 6 will contain increased amount of water the farther up the introduced pre-heated hydrogen containing reducing agent 6 ascends in the upper interior portion UP. As shown in the diagram, hematite is to be reduced into magnetite at high temperature (e.g. 1200 °C), despite that the water content (e.g. 90%) of the pre-heated hydrogen containing reducing agent 6 is high, reduction into magnetite still can be achieved. The present solution to at least one of the objective problems makes use of the high temperature of the iron ore oxide material holding thermal energy and charged from the iron ore oxide material provider unit into the upper interior portion. This high temperature of the iron ore oxide material promotes that the reduction is possible, despite the fact that the pre-heated hydrogen containing reducing agent, when reaching an upper zone of the upper interior portion, will contain an increased amount of water.

Fig. 5 illustrates a hydrogen/hydrogen+iron Mol/mol phase diagram from different temperature aspects. Reference O represents the Liquidus phase, reference P represents the Bcc/Liquidus phase, reference Q represents the Bcc phase, and reference R represents the Fcc phase. It is shown in the diagram that the iron Fe will be subject to sintering in the Bcc+Liquidus phase P, i.e. the iron of the reduced iron ore material hardens by means of a relative low temperature (e.g. 200-600 °C) due to the fact that the introduced hydrogen maintains its chemical reactivity and/or high impetus.

The hydrogen does not need to be "burned" or strongly heated up to e.g. 1200 °C for providing heat to the reduction as being shown by prior art.

On the contrary, by using the thermal energy of the iron ore oxide material charged into the reduction facility for providing the reduction, it is possibly to control and/or adjust and/or fine set the temperature of the introduced hydrogen containing reducing agent for reaching the at least one desired passivation parameter value.

The heat treatment process can thus efficiently be controlled by the control circuitry by controlling the temperature of the introduced hydrogen with maintained high chemical reactivity and/or high impetus.

Alternatively, the control circuitry thus is adapted to control the temperature of the introduced pre-heated hydrogen containing reduction agent for providing sintering of the reduced iron ore material agglomerate by such relative low temperature under an extended time period for achieving a reduced iron ore material that is resistant to re-oxidation.

In such way is achieved that the intermediate product (such as sponge iron, e.g. pellets, briquettes etc.) is prevented from having a tendency to revert back to an oxide state when exposed to natural environments and reduces the risk for spontaneous ignition process.

Alternatively, the control circuitry is adapted to control the interior gas pressure in the reduction facility and/or the hydrogen temperature and/or hydrogen pressure of the pre-heated hydrogen containing reducing agent.

The control circuitry 50 is adapted for providing sintering of the reduced iron ore agglomerate subject to sintering in the Bcc+Liquidus phase P, or preferably exposing the reduced metal material by a temperature e.g. within a range of 200-600 °C and high hydrogen/hydrogen+iron Mol/mol relation e.g. 0,75-1,0 (hatched area S). By such relative low temperature, under an extended time period, and by hydrogen with high chemical reactivity and/or high impetus, there is provided a reduced iron ore material that is resistant to re-oxidation.

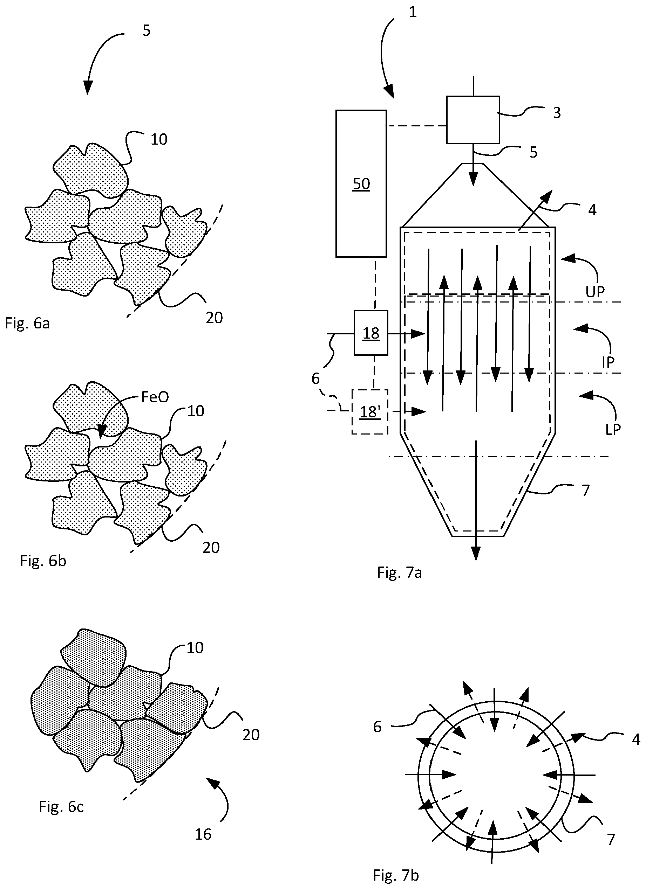

Figs. 6a-6c illustrate iron ore agglomerate structure transferring phases related to the heat treatment process. Fig. 6a shows an agglomerate structure of an iron ore oxide material 5 holding thermal energy being subject to reduction in the upper interior portion of a reduction facility (not shown). It is shown that iron ore oxide particles 10 are bond to each other forming a porous agglomerate 20, the porosity of which promotes contact between the iron ore oxide and the introduced pre-heated hydrogen containing reducing agent during the reduction. Fig. 6b shows the agglomerate 20 having reduced iron ore oxide material ready for heat treatment. Alternatively, the particles 10 have been sintered in the upper interior portion. Some iron ore oxide material (FeO) may be constrained and/or remains in the pores of the agglomerate 20. For providing a reduced iron ore material that is resistant to re-oxidation, there is provided a heat treatment process for heat treatment of the reduced iron ore material and/or the iron ore oxide material subject to reduction. This is achieved by that the control circuitry 50 is adapted to control the temperature of the introduced pre-heated hydrogen containing reducing agent 6 toward a pre-determined temperature for providing sintering and/or heat treatment of the iron ore oxide material during a pre-determined time period. Fig. 6c shows entirely or substantially entirely reduced iron ore material, wherein the particles 10 of the agglomerate 20 form a more dense structure, which conceals eventual FeO from being able to contact surrounding atmosphere exterior the agglomerate 20, when it has been discharged from the reduction facility. Fig. 6c shows that the particles 10 of the agglomerate 20 of the reduced iron ore material 16 form a more compact structure achieved by the sintering as shown and explained in conjunction with in Fig. 5.

Figs. 7a-7b illustrate a metal material production configuration 1 adapted for reduction of a metal oxide material 5 holding thermal energy into a reduced metal material 16 according to a fourth example. The metal material production configuration 1 comprises a metal oxide material provider unit 3, such as a metal oxide pelletizing plant or metal oxide pre-heating plant, configured for providing the metal oxide material 5 holding thermal energy.

The metal material production configuration 1 comprises a reduction facility 7 configured to reduce the metal oxide material 5 holding thermal energy. The metal oxide material 5 holding thermal energy is charged into an upper interior portion UP of the reduction facility 7.

A reducing agent pre-heater 18 configured to pre-heat the hydrogen containing reducing agent is electrically coupled to a control unit 50. The pre-heated hydrogen containing reducing agent 6 is introduced into an intermediate interior portion IP of the reduction facility 7, whereby the pre-heated hydrogen containing reducing agent 6 is adapted to react with the metal oxide material 5 holding thermal energy for reducing the metal oxide material 5 by utilizing the thermal energy of the metal oxide material 5 to heat or further heat the introduced pre-heated hydrogen containing reducing agent 6, providing a chemical reaction between the pre-heated hydrogen containing reducing agent 6 and the metal oxide material 5 holding thermal energy.

The metal oxide material provider unit 3 is electrically coupled to the control circuitry 50, which is adapted for coarse setting of the thermal energy of the metal oxide material 5. The control circuitry 50 controlling the reducing agent pre-heater 18 is adapted for fine setting of the temperature of the introduced pre-heated hydrogen containing reducing agent 6 for achieving at least one desired passivation parameter value.

The control circuitry 50 in Fig. 7a is adapted for controlling the temperature of the chemical reaction by coarse adjustment of the thermal energy provided by the metal oxide material provider unit 3 and by fine adjustment of the temperature needed for the chemical reaction and/or the heat treatment process by controlling the temperature of the introduced pre-heated hydrogen containing reducing agent 6.

Additionally, the pre-heated hydrogen containing reducing agent may be introduced at different levels into the reduction facility and may be introduced at different temperatures, pressures, flows etc.

For example, the control circuitry 50 may be electrically coupled to an additional reducing agent pre-heater 18' configured to pre-heat the hydrogen containing reducing agent 6 introduced into a lower interior portion LP of the reduction facility 7.

In such way there is achieved efficient adjustment of the temperature for reduction of the metal oxide material at the same time as efficient adjustment of the temperature for heat treatment of the reduced metal material is achieved.

The introduced pre-heated hydrogen containing reducing agent 6 fed into the lower and/or interior portion LP may comprise 80-100 % hydrogen, preferably 100% hydrogen.

Alternatively, the temperature of the pre-heated hydrogen containing reducing agent 6 introduced into the intermediate interior portion IP is controlled by the control circuitry 50 to provide that a waste reduction fluid 4 produced by the reduction contains 100 % water steam or substantially 100% water steam and is discharged. Due to the high temperature of the charged metal oxide material 5, there is achieved an efficient reduction of the metal oxide material 5 despite that the fact that the pre-heated hydrogen containing reducing agent 6 comprises a large amount of water steam.

Fig. 7b shows the reduction facility 7 in cross-section. The pre-heated hydrogen containing reducing agent 6 is introduced circumferentially around the intermediate interior portion. The waste reduction fluid 4 is discharged from the reduction facility 7 circumferentially.

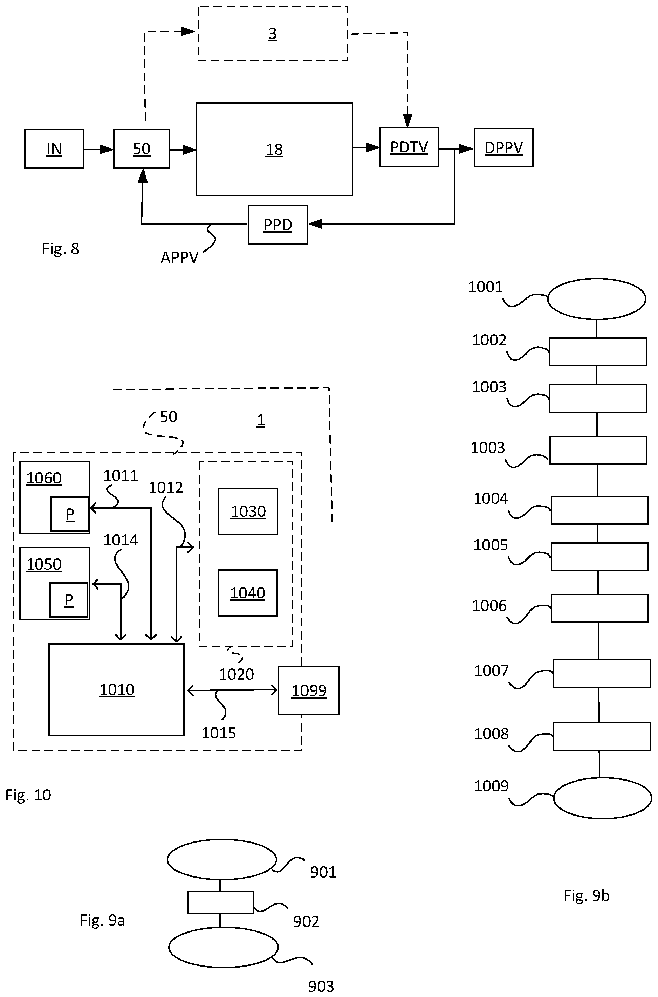

Fig. 8 illustrates a closed loop diagram for a closed loop algorithm used by a metal material production configuration according to a fifth example.

A control circuitry 50 is electrically coupled to a metal oxide material provider unit 3, such as a metal oxide pelletizing plant or metal oxide pre-heating plant, and is adapted to adjust the temperature of the metal oxide material holding thermal energy to be charged into a reduction facility. The control circuitry 50 may be adapted to control the temperature of the metal oxide material holding thermal energy toward a pre-determined temperature value PDTV for providing a heat treatment process in the reduction facility for heat treatment of the metal oxide material subject to reduction and/or the reduced metal material during a pre-determined time period, thereby reaching the at least one desired passivation parameter value DPPV of the reduced metal material.

The at least one desired passivation parameter value DPPV may regard a porosity parameter and/or a dimension parameter and/or a weight parameter and/or a metal particle structure parameter and/or a sample cut evenness parameter and/or a shrinkage parameter and/or a sintering parameter etc.

A passivation parameter detector PPD is associated with the reduction facility for detecting an actual passivation parameter value APPV. The control circuitry 50 may execute a calculation and comparison procedure for adjusting the temperature of the metal oxide material holding thermal energy by means of the metal oxide material provider unit 3.

Alternatively, the control circuitry 50 may be adapted to control the temperature of the charged metal oxide material in such way that the pre-determined temperature value PDTV, for providing a heat treatment process, presents a temperature value of the heat treatment process for reaching the at least one desired passivation parameter value DPPV.

The control circuitry 50 repeats the closed loop algorithm until the at least one desired passivation parameter value DPPV is reached.

The control circuitry 50 is electrically coupled to a reducing agent temperature adjusting device 18 configured for temperature adjustment of a hydrogen containing reducing agent to be introduced into a reduction facility of the metal material production configuration, for achieving at least one desired passivation parameter value DPPV of the reduced metal material. The closed loop diagram may use a starting process where an input temperature value IN of the pre-heated hydrogen containing reducing agent is used.

The control circuitry 50 is adapted to control the reducing agent temperature adjusting device 18 in such way that the temperature of the introduced pre-heated hydrogen containing reducing agent is adapted toward a pre-determined temperature value PDTV for providing a heat treatment process in the reduction facility for heat treatment of the metal oxide material subject to reduction and/or the reduced metal material during a pre-determined time period thereby reaching the at least one desired passivation parameter value DPPV of the reduced metal material. The control circuitry 50 takes into account the at least one desired passivation parameter value DPPV when determining the pre-determined temperature value PDTV. The at least one desired passivation parameter value DPPV of the reduced metal material is determined in view of reaching an efficient passivation of the reduced metal material.

The at least one desired passivation parameter value DPPV may regard a porosity parameter and/or a dimension parameter and/or a weight parameter and/or a metal particle structure parameter and/or a sample cut evenness parameter and/or a shrinkage parameter and/or a sintering parameter etc.

A passivation parameter detector PPD is associated with the reduction facility for detecting an actual passivation parameter value APPV.

The actual passivation parameter value APPV of the reduced metal material is detected by the passivation parameter detector PPD electrically coupled to the to the control circuitry 50. The control circuitry 50 executes a calculation and comparison procedure for adjusting the reducing agent temperature adjusting device 18 in such way that the temperature of the introduced pre-heated hydrogen containing reducing agent is adapted toward a pre-determined temperature value PDTV for reaching the at least one desired passivation parameter value DPPV.

The control circuitry 50 repeats the closed loop algorithm until the at least one desired passivation parameter value DPPV is reached.

The control circuitry 50 is configured to compare the actual passivation parameter value APPV with the at least one desired passivation parameter value DPPV and controls the reducing agent temperature adjusting device 18 to adjust the temperature of the hydrogen containing reducing agent until the at least one desired passivation parameter value DPPV is reached.

The metal oxide material holding thermal energy may be metal oxide pellets that is pre-heated to comprise thermal energy. The metal oxide pellets may be produced by a pelletizing plant processing metal mixture and transferred into a reduction facility by means of a transportation steel band.

The upper interior portion of the reduction facility is configured for reduction of the metal oxide pellets and the reduction facility is configured to provide the chemical reaction between the hydrogen containing reducing agent and the metal oxide pellets.

The lower portion and/or intermediate portion being configured for the heat treatment process for heat treatment of the metal oxide material.

The reduced and heat hardened metal material is discharged from the lower interior portion by means of a discharge transport unit coupled to an opening of the lower interior portion.

A product produced by the method is the reduced metal material (16) consisting of reduced iron ore particles bond to each other forming pellets of heat treated and/or heat hardened and/or passivated reduced iron ore material in the form of iron drops.

Alternatively, a computer of the control circuitry is electrically coupled to the metal oxide material charging device for controlling the charging rate into the reduction facility.

The computer may be electrically coupled to the metal oxide material provider unit for controlling the temperature of the metal oxide pellets to be charged and/or electrically coupled to the reducing agent temperature adjusting device for controlling the temperature of the introduced hydrogen containing reducing agent and/or electrically coupled to the discharge transport unit.

Fig. 9a illustrates a flowchart showing an exemplary method of reduction of a metal oxide material holding thermal energy into a reduced metal material by means of a metal material production configuration. The metal material production configuration comprises; a metal oxide material provider unit configured for providing the metal oxide material holding thermal energy; a metal oxide material charging device configured to charge the metal oxide material into an upper interior portion of a reduction facility; a reducing agent inlet device configured to introduce a hydrogen containing reducing agent into an intermediate interior portion and/or lower interior portion of the reduction facility, whereby the hydrogen containing reducing agent is adapted to react with the metal oxide material holding thermal energy for reducing the metal oxide material by utilizing the thermal energy of the metal oxide material to heat or further heat the introduced hydrogen containing reducing agent for providing a chemical reaction between the hydrogen containing reducing agent and the metal oxide material. The metal material production configuration is configured for providing a heat treatment process for heat treatment of the metal oxide material subject to reduction and/or the reduced metal material; and a control circuitry, electrically coupled to a reducing agent temperature adjusting device configured to adjust the temperature of the hydrogen containing reducing agent, is adapted for controlling the temperature of the introduced hydrogen containing reducing agent for reaching at least one desired passivation parameter value of the reduced metal material.

The method in Fig. 9a starts at step 901. Step 902 comprises adaption of the method. Step 903 comprises stop of the method. Step 902 may comprise the steps of; reducing the metal oxide material in the upper interior portion by utilizing the thermal energy of the metal oxide material to heat or further heat the introduced hydrogen containing reducing agent for providing a chemical reaction between the hydrogen containing reducing agent and the metal oxide material; providing a heat treatment process for heat treatment of the metal oxide material subject to reduction and/or the reduced metal material before being discharged from the lower interior portion; and controlling the temperature of the introduced hydrogen containing reducing agent for adjustment of the chemical reaction and/or the heat treatment process for reaching at least one desired passivation parameter value of the reduced metal material.

Fig. 9b illustrates a flowchart showing an exemplary method of reduction of a metal oxide material holding thermal energy by means of a metal material production configuration herein disclosed. The method starts at step 1001. Step 1002 comprises pre-heating of the metal oxide material. Step 1003 comprises charging of the metal oxide material holding thermal energy into the reduction facility. Step 1004 comprises introducing pre-heated hydrogen into the reduction facility. Step 1005 comprises reducing the metal oxide material in the upper interior portion by utilizing the thermal energy of the metal oxide material to heat or further heat the introduced hydrogen containing reducing agent for providing a chemical reaction between the hydrogen containing reducing agent and the metal oxide material. Step 1006 comprises providing a heat treatment process for heat treatment of the reduced metal material in the intermediate and/or lower interior portion. Step 1007 comprises controlling the temperature of the introduced hydrogen containing reducing agent for adjustment of the chemical reaction and/or the heat treatment process for reaching at least one desired passivation parameter value of the reduced metal material. Step 1008 comprises discharging the reduced metal material, having the at least one desired passivation parameter value and being resistant to re-oxidation, from the reduction facility. Step 1009 comprises stop of the method.

Alternatively, a reducing agent pre-heating device is adapted to adjust the temperature of a pre-heated introduced hydrogen containing reducing agent.

Fig. 10 illustrates a metal material production configuration 1 comprising a control circuitry 50 comprising a computer (not shown) according to a sixth example. The control circuitry 50 is configured to control any exemplary method herein disclosed. The control circuitry 50 may comprise a non-volatile memory NVM 1020, which is a computer memory that can retain stored information even when the control circuitry 50 or the computer not being powered. The control circuitry 50 further comprises a processing unit 1010 and a read/write memory 1050.

The NVM 1020 comprises a first memory unit 1030. A computer program (which can be of any type suitable for any operational database) is stored in the first memory unit 1030 to be used for controlling the functionality of the control circuitry 50.

Furthermore, the control circuitry 50 comprises a bus controller (not shown), a serial communication port (not shown) providing a physical interface, through which information transfers separately in two directions. The control circuitry 50 also comprises any suitable type of I/O module (not shown) providing input/output signal transfer, an A/D converter (not shown) for converting continuously varying signals from the passivation parameter detector PPD and/or temperature sensor devices for detecting temperatures of the metal oxide material holding thermal energy and/or temperatures of the hydrogen containing reducing agent introduced into the reduction facility and/or different monitoring units (not shown) into binary code suitable to be processed by the computer of the control circuitry 50.

The control circuitry 50 further comprises an input/output unit (not shown) for adaption to time and date. The control circuitry 50 also may comprise an event counter (not shown) for counting the number of event multiples that occur during the adjustment of the chemical reaction and/or the heat treatment process for reaching at least one desired passivation parameter value of the reduced metal material.

Furthermore, the control circuitry 50 includes interrupt units (not shown) for providing a multi-tasking performance and real time computing. The NVM 1020 also includes a second memory unit 1040 for external controlled operation.

A data medium adapted for storing a data program P comprises driver routines adapted for commanding the operating of the metal material production configuration 1.

The data program P is adapted for operating the control circuitry 50 in performing any exemplary method described herein. The data program P comprises routines for executing the commands under operation of the metal material production configuration 1. The data program P comprises a program code, which is readable on the computer, for causing the computer to perform an exemplary method herein described.

The data program P further may be stored in a separate memory 1060 and/or in the read/write memory 1050. The data program P is in this embodiment stored in executable or compressed data format.

It is to be understood that when the processing unit 1010 is described to execute a specific function that involves that the processing unit 1010 executes a certain part of the program stored in the separate memory 1060 or a certain part of the program stored in the read/write memory 1050.

The processing unit 1010 is associated with a signal (data) port 1099 for communication via a first data bus 1015, which signal (data) port 1099 may be adapted to be electrically coupled to an electronic control circuitry of an operator station (not shown).

In such way is achieved that an operator via a display of the electronic control circuitry can control and monitor the metal material production configuration 1.

The non-volatile memory NVM 1020 is adapted for communication with the processing unit 1010 via a second data bus 1012. The separate memory 1060 is adapted for communication with the processing unit 1010 via a third data bus 1011. The read/write memory 1050 is adapted to communicate with the processing unit 1010 via a fourth data bus 1014. The signal (data) port 1099 may be connectable to data links of e.g. a network coupled to the control circuitry 50.

When data is received by the signal port 1099, the data will be stored temporary in the second memory unit 1040. After that the received data is temporary stored, the processing unit 1010 will be ready to execute the program code, in accordance with the exemplary methods.

Preferably, the signals (received by the signal (data) port 1099) comprise information about operational status of the metal material production configuration 1.

The received signals at the signal port 1099, such as a serial bus, may be used by the control circuitry 50 for controlling and monitoring the reduction and heat treatment process.

The signals received by the signal (data) port 1099 can be used for historic data and data regarding operation of the metal material production configuration 1.

The metal material production configuration 1 may be configured to be coupled to a data network via the signal buss configured for electrical interface explicitly providing electrical compatibility and related data transfer, which data may include information about status of the metal material production configuration 1 and sensor devices. Data may also be manually fed to or presented from the computer via a suitable communication device, such as a display (not shown).

Separate sequences of the method may be executed by the computer, wherein the computer runs the data program P being stored in the separate memory 1060 or the read/write memory 1050. When the computer runs the data program P, the method steps according to any example disclosed herein will be executed.

A data program product comprising a program code stored on a data medium may be provided, which product is readable on a suitable computer, for performing the exemplary method steps herein, when the data program P is run on the computer.

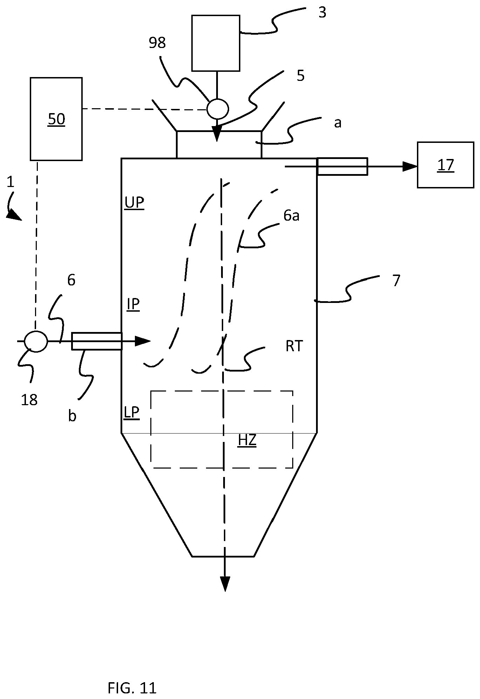

Fig. 11 shows a metal material production configuration 1 adapted for reduction of an iron ore oxide material 5 holding thermal energy into a reduced iron ore material 16. The metal material production configuration 1 comprises an iron ore oxide material provider unit 3 configured for providing the iron ore oxide material 5 holding thermal energy. An iron ore oxide material charging device a configured to charge the iron ore oxide material 5 into an upper interior portion UP of a reduction facility 7. A reducing agent inlet device b configured to introduce a hydrogen containing reducing agent 6 into an intermediate interior portion IP and/or lower interior portion LP of the reduction facility 7. The hydrogen containing reducing agent 6 is pre-heated and is adapted to react with the iron ore oxide material 5 holding thermal energy for reducing the iron ore oxide material 5 by utilizing the thermal energy of the iron ore oxide material 5 to further heat the introduced hydrogen containing reducing agent 6 for providing a chemical reaction between the hydrogen containing reducing agent 6 and the iron ore oxide material 5.

The reducing agent 6 is pre-heated and is introduced into the direct reduction facility 7 so that the reducing agent 6, besides providing the direct reduction and/or the chemical reaction, also decreases the cooling rate of the direct reduced iron ore material RT and/or the iron ore oxide material 5 subject to direct reduction, descending downward through the direct reduction facility 7. The temperature of the iron ore oxide material 5 charged into the upper interior portion UP of the direct reduction facility 7 is lower than the temperature of the pre-heated reducing agent 6 being introduced into the direct reduction facility 7.

The reduction potential of the hydrogen of the reducing agent (reference sign 6a) moved through the upper interior portion is lower than that of the hydrogen of the reducing agent introduced farther down in the reduction facility 7.

The reduction facility 7 is configured for providing a heat treatment process for heat treatment of the iron ore oxide material 5 subject to reduction and/or the reduced iron ore material 16.

The direct reduction facility 7 comprises a heat treatment zone HZ configured for the heat treatment process for heat treatment of the reduced iron ore material by exposing the reduced iron ore material to a required heat treatment temperature for providing heat treatment of the reduced metal material to obtain a densified reduced iron ore material.

The metal material production configuration 1 comprises a control circuitry 50, electrically coupled to a reducing agent temperature adjusting device 18 configured to adjust the temperature of the reducing agent 6. The control circuitry 50 is adapted for controlling the temperature of the introduced reducing agent 6 for reaching at least one desired passivation parameter value of the reduced iron ore material 16.

The upper interior portion UP is configured to provide the chemical reaction to at least some extent by further heating the reducing agent (reference sign 6a) moved through the upper interior portion UP for achieving the chemical reaction between the iron ore oxide material 5 and the reducing agent 6a moved through the upper interior portion.

By introducing a reducing agent 6 with higher temperature into the direct reduction facility it is achieved that the iron ore oxide material 5, holding thermal energy, reaching the intermediate portion IP and/or the lower interior portion LP and being subjected for direct reduction and/or the heat treatment, does not cool down rapidly in the direct reduction facility 7, i.e. the cooling rate of the iron ore oxide material 5 being subjected for direct reduction and/or the heat treatment is decreased.

Alternatively, the direct reduction facility 7 is configured for permitting the reduced iron ore material to descend into the lower interior portion LP and/or into the intermediate interior portion IP for providing the heat treatment process.

Alternatively, the heat treatment of the reduced iron ore material is achieved by the introduction of the pre-heated reducing agent 6, wherein the reduced iron ore material 16 is brought into contact with the pre-heated reducing agent 6.

The reducing agent temperature adjusting device 18 is configured for upholding the required heat treatment temperature by the introduction of the pre-heated reducing agent 6.

Alternatively, the step of upholding the required heat treatment temperature is provided to such extent that the introduction of the pre-heated (hydrogen containing) reducing agent decreases the cooling rate of the reduced iron ore material 16 for maintaining the required heat treatment temperature.

The direct reduction facility 7 comprises a metal material discharge device c configured to discharge the reduced metal material 16 that has been subjected to heat treatment.

A control circuitry of the metal material production configuration 1 is coupled to the iron ore oxide material provider unit 3 and is configured to control the temperature of the iron ore oxide material 5 to be charged, such that the iron ore oxide material 5 subject to reduction and/or heat treatment turns toward a pre-determined temperature during a pre-determined time period sufficient long to enable the heat treatment process providing a desired passivation parameter value of the reduced iron ore material, in turn providing the intermediate product resistant to re-oxidation.

Alternatively, the control circuitry 50 is coupled to the reducing agent temperature adjusting device 18 configured to pre-heat the reducing agent before being introduced into the direct reduction facility 7 and is configured to control the temperature of the reducing agent such that the iron ore oxide material subject to reduction and/or heat treatment turns toward a pre-determined temperature.

Alternatively, the control circuitry 50 is electrically coupled to a reducing agent temperature adjusting device 18 configured for temperature adjustment of a hydrogen containing reducing agent being introduced into a reduction facility of the metal material production configuration, for achieving at least one desired passivation parameter value.

Alternatively, the control circuitry 50 is electrically coupled to a reducing agent temperature adjusting device 18 configured for temperature adjustment of the hydrogen containing reducing agent being introduced into a reduction facility for the chemical reaction and/or the heat treatment process by controlling the temperature of the introduced pre-heated hydrogen containing reducing agent 6.

The control circuitry 50 is coupled to a material temperature adjusting device 98 adapted for controlling the temperature of the chemical reaction by adjustment of the thermal energy provided by the iron ore oxide material provider unit 3
In such way is achieved efficient treatment and energy saving re-cycling of high-temperature water steam of the top gas, generated by the chemical reaction supported by the high temperature charged iron ore oxide material, which high-temperature water steam fed to a high-temperature electrolysis unit 17, and thus providing that the high-temperature electrolysis unit is able to operate energy efficient due to an efficient heat recovery of the high-temperature water steam and due to the high content of high-temperature water steam of the top gas discharged from the direct reduction facility.

Alternatively, a high-temperature electrolysis unit is configured to produce hydrogen and the iron ore oxide material provider unit is configured to provide the iron ore oxide material holding the thermal energy.

Alternatively, the direct reduction facility comprises an iron ore oxide material charging inlet device, a reducing agent inlet device configured to introduce the hydrogen containing reducing agent holding an additional thermal energy.

Alternatively, the control circuitry is configured to control the direct reduction of the iron ore oxide material by adjusting the temperature of the charged iron ore oxide material and introduced hydrogen containing reducing agent.

Alternatively, by means of the high-temperature of the charged iron ore oxide material holding the thermal energy, it is achieved that the high-temperature exit gas (top gas) produced in the upper interior portion comprises high-temperature water steam, due to high-temperature transfer from the charged iron ore oxide material further heating the hydrogen containing reducing agent that has ascended to the upper interior portion providing said (endothermal) chemical reaction.

Alternatively, the high-temperature water steam is transferred to a high-temperature electrolysis unit 17.

Alternatively, a carbon containing gas is added to the reducing agent in order to incorporate carbon into the intermediate product in a carburizing zone (not shown).

Alternatively, the carburizing zone corresponds with a separate (insulated) carburizing zone configured for avoiding mixing the carbon containing substance with the reducing agent.

Alternatively, the carburizing zone constitutes a carburizing volume of the interior of the direct reduction facility, which carburizing volume is configured for reduction of the iron ore oxide material and configured for carburizing the iron ore oxide material subject to reduction, by mixing the carbon containing substance with the reducing agent.

The present invention is of course not in any way restricted to the preferred examples described above, but many possibilities to modifications, or combinations of the described examples thereof should be apparent to a person with ordinary skill in the art without departing from the basic idea of the invention as defined in the appended claims.

## Claims

1. A method of direct reduction of a metal oxide material (5) holding thermal energy into a direct reduced metal material (16); wherein
- the metal oxide material (5) holding thermal energy is provided by means of a metal oxide material provider unit (3) and is charged via a metal oxide material charging device (a) into an upper interior portion (UP) of a direct reduction facility (7) of a metal material production configuration (1);
- a control circuitry (50) is electrically coupled to a reducing agent temperature adjusting device (17) configured to adjust the temperature of a hydrogen containing reducing agent (6, 6') to be introduced into an intermediate interior portion (IP) and/or a lower interior portion (LP) of the direct reduction facility (7) via a reducing agent inlet device (b);
the method is **characterized by** the steps of:
- reducing the metal oxide material (5) in the upper interior portion (UP) by utilizing the thermal energy of the metal oxide material (5) to heat or further heat the introduced hydrogen containing reducing agent (6, 6') for providing a chemical reaction between the hydrogen containing reducing agent (6, 6') and the metal oxide material (5);
- providing a heat treatment process for heat treatment of the metal oxide material (5) subject to reduction and/or the reduced metal material (16) before being discharged from the lower interior portion (LP); and
- controlling the temperature of the introduced hydrogen containing reducing agent (6, 6') for adjustment of the chemical reaction and/or the heat treatment process for reaching at least one desired passivation parameter value (DPPV) of the reduced metal material (16); wherein the direct reduction facility (7) comprises a passivation parameter detector (PPD) coupled to the control circuitry (50) configured for detection of an actual passivation parameter value (APPV); providing that the direct reduced metal material discharged from the direct reduction facility (7) forms an intermediate product that is resistant to re-oxidation.

2. The method according to claim 1, **wherein** the reducing agent temperature adjusting device (17) comprises a reducing agent pre-heating device (18) adapted to adjust the temperature of a pre-heated introduced hydrogen containing reducing agent (6, 6'), which reducing agent pre-heating device (18) is electrically coupled to the control circuitry (50).

3. The method according to claim 1 or 2, **wherein** the step of controlling the temperature of the introduced hydrogen containing reducing agent (6, 6') comprises adaptation of the temperature toward a pre-determined temperature for providing sintering of the metal oxide material (5) subject to reduction and/or heat treatment of the reduced metal material (16) during a pre-determined time period for reaching the at least one desired passivation parameter value (DPPV).

4. The method according to any of claims 1 to 3, **wherein** the introduced hydrogen containing reducing agent (6) comprises 90-100 % hydrogen, preferably 100% hydrogen by volume.

5. The method according to any of the preceding claims, **wherein** the introduced hydrogen containing reducing agent (6, 6') being of such volume that complete reduction of the metal oxide material (5) is achieved, providing an excess volume of hydrogen containing reducing agent (6, 6') in the direct reduction facility (7) for providing said reduction of the metal oxide material (5).

6. The method according to any of the preceding claims, **wherein** the introduced hydrogen containing reducing agent (6, 6') being introduced into the direct reduction facility (7) via a reducing agent inlet device (b) comprising at least one reducing agent inlet of the direct reduction facility (7).

7. The method according to any of the preceding claims, **wherein** the at least one desired passivation parameter value (DPPV) regards a porosity parameter and/or a dimension parameter and/or a weight parameter and/or a metal particle structure parameter and/or a sample cut evenness parameter and/or a shrinkage parameter and/or a sintering parameter and/or a Cold Crushing Strength parameter.

8. A metal material production configuration (1) adapted for reduction of a metal oxide material (5) holding thermal energy into a direct reduced metal material (16); the metal material production configuration (1) comprises;
a metal oxide material provider unit (3) configured for providing the metal oxide material (5) holding thermal energy;
a metal oxide material charging device (a) configured to charge the metal oxide material (5) into an upper interior portion (UP) of a direct reduction facility (7);
a reducing agent inlet device (b) configured to introduce a hydrogen containing reducing agent (6) into an intermediate interior portion (IP) and/or lower interior portion (LP) of the direct reduction facility (7), whereby the hydrogen containing reducing agent (6, 6') is adapted to react with the metal oxide material (5) holding thermal energy for reducing the metal oxide material (5) by utilizing the thermal energy of the metal oxide material (5) to heat or further heat the introduced hydrogen containing reducing agent (6, 6') for providing a chemical reaction between the hydrogen containing reducing agent (6. 6') and the metal oxide material (5); **characterized by**
the direct reduction facility (7) of the metal material production configuration (1) is configured for providing a heat treatment process for heat treatment of the metal oxide material (5) subject to reduction and/or the direct reduced metal material (16); and
a control circuitry (50), electrically coupled to a reducing agent temperature adjusting device (17) configured to adjust the temperature of the hydrogen containing reducing agent (6, 6'), is adapted for controlling the temperature of the introduced hydrogen containing reducing agent (6, 6') for reaching at least one desired passivation parameter value (DPPV) of the direct reduced metal material (16); wherein the direct reduction facility (7) further comprises a passivation parameter detector (PPD) coupled to the control circuitry (50) configured for detection of an actual passivation parameter value (APPV); providing that the direct reduced metal material (16) discharged from the direct reduction facility (7) forms an intermediate product that is resistant to re-oxidation.

9. The metal material production configuration (1) according to claim 8, **wherein** the control circuitry (50) is electrically coupled to the reducing agent temperature adjusting device (17) configured to pre-heat the hydrogen containing reducing agent (6, 6') to be introduced into an intermediate interior portion (IP) and a lower interior portion (LP) of the direct reduction facility (7).

10. The metal material production configuration (1) according to claim 8 or 9, **wherein** the control circuitry (50) is configured to control the temperature of the metal oxide material (5) to be charged into the direct reduction facility (7).

11. A data program (P), programmed for causing the metal material production configuration (1) according to any of claims 8 to 10 to execute the method according to any of claims 1 to 7, wherein said data program (P) comprises a program code readable on a computer of the control circuitry (50) for providing the steps of:
- reducing the metal oxide material (5) in the upper interior portion (UP) by utilizing the thermal energy of the metal oxide material (5) to heat or further heat the introduced hydrogen containing reducing agent (6, 6') for providing a chemical reaction between the hydrogen containing reducing agent (6, 6') and the metal oxide material (5);
- providing a heat treatment process for heat treatment of the metal oxide material (5) subject to reduction and/or the direct reduced metal material (16) before being discharged from the lower interior portion (LP); and
- controlling the temperature of the introduced hydrogen containing reducing agent (6, 6') for adjustment of the chemical reaction and/or the heat treatment process for reaching at least one desired passivation parameter value (DPPV) of the direct reduced metal material (16).

12. A data medium, configured for storing the data program (P) according to claim 11, wherein the data medium comprises a program code being readable on the computer for performing the method according to any of claims 1 to 7.

13. A product produced by the method according to claim 7, **wherein** the direct reduced metal material (16) consists of reduced iron ore particles bond to each other forming pellets of heat treated and/or heat hardened and/or passivated reduced iron ore material in the form of iron drops.

## Patentansprüche

1. Verfahren zur Direktreduktion eines Metalloxidmaterials (5), das Wärmeenergie hält, zu einem direktreduzierten Metallmaterial (16); wobei
- das Metalloxidmaterial (5), das Wärmeenergie hält, mittels einer Metalloxidmaterialbereitstellereinheit (3) bereitgestellt wird und über eine Metalloxidmaterialladevorrichtung (a) in einen oberen Innenabschnitt (UP) einer Direktreduktionsanlage (7) einer Metallmaterialproduktionsanordnung (1) geladen wird;
- eine Steuerschaltung (50) elektrisch an eine Reduzierwirkstofftemperatureinstellungsvorrichtung (17) gekoppelt ist, die dazu angeordnet ist, die Temperatur eines wasserstoffhaltigen Reduzierwirkstoffs (6, 6') einzustellen, der über eine Reduzierwirkstoffeinlassvorrichtung (b) in einen Zwischeninnenabschnitt (IP) und/oder einen unteren Innenabschnitt (LP) der Direktreduktionsanlage (7) einzuführen ist;
das Verfahren durch die folgenden Schritte gekennzeichnet ist:
- Reduzieren des Metalloxidmaterials (5) in dem oberen Innenabschnitt (UP) unter Verwendung der Wärmeenergie des Metalloxidmaterials (5), um den eingeführten wasserstoffhaltigen Reduzierwirkstoff (6, 6') zum Bereitstellen einer chemischen Reaktion zwischen dem wasserstoffhaltigen Reduzierwirkstoff (6, 6') und dem Metalloxidmaterial (5) zu erhitzen oder ferner zu erhitzen;
- Bereitstellen eines Hitzebehandlungsprozesses zur Hitzebehandlung des Metalloxidmaterials (5), das der Reduktion unterzogen wird, und/oder des reduzierten Metallmaterials (16), bevor es aus dem unteren Innenabschnitt (LP) ausgestoßen wird; und
- Steuern der Temperatur des eingeführten wasserstoffhaltigen Reduzierwirkstoffs (6, 6') zur Einstellung der chemischen Reaktion und/oder des Hitzebehandlungsprozesses zum Erreichen mindestens eines erwünschten Passivierungsparameterwerts (DPPV) des reduzierten Metallmaterials (16); wobei die Direktreduktionsanlage (7) einen Passivierungsparameterdetektor (PPD) umfasst, der an die Steuerschaltung (50) gekoppelt und zur Detektion eines realen Passivierungsparameterwerts (APPV) angeordnet ist; was bereitstellt, dass das direktreduzierte Metallmaterial, das aus der Direktreduktionsanlage (7) ausgestoßen wird, ein Zwischenprodukt bildet, das gegenüber einer erneuten Oxidation widerstandsfähig ist.

2. Verfahren nach Anspruch 1, wobei die Reduzierwirkstofftemperatureinstellungsvorrichtung (17) eine Reduzierwirkstoffvorerhitzungsvorrichtung (18) umfasst, die dazu angepasst ist, die Temperatur eines vorerhitzten eingeführten wasserstoffhaltigen Reduzierwirkstoffs (6, 6') einzustellen, wobei die Reduzierwirkstoffvorerhitzungsvorrichtung (18) elektrisch an die Steuerschaltung (50) gekoppelt ist.

3. Verfahren nach Anspruch 1 oder 2, wobei der Schritt des Steuerns der Temperatur des eingeführten wasserstoffhaltigen Reduzierwirkstoffs (6, 6') eine Anpassung der Temperatur in Richtung einer vorbestimmten Temperatur zum Bereitstellen einer Sinterung des Metalloxidmaterials (5), das der Reduktion unterzogen wird, und/oder einer Hitzebehandlung des reduzierten Metallmaterials (16) während eines vorbestimmten Zeitraums zum Erreichen des mindestens einen erwünschten Passivierungsparameterwerts (DPPV) umfasst.

4. Verfahren nach einem der Ansprüche 1 bis 3, wobei der eingeführte wasserstoffhaltige Reduzierwirkstoff (6) 90-100 Volumen-% Wasserstoff, bevorzugt 100 Volumen-% Wasserstoff, umfasst.

5. Verfahren nach einem der vorhergehenden Ansprüche, wobei der eingeführte wasserstoffhaltige Reduzierwirkstoff (6, 6') ein solches Volumen aufweist, dass eine vollständige Reduktion des Metalloxidmaterials (5) erreicht wird, was ein überschüssiges Volumen an wasserstoffhaltigem Reduzierwirkstoff (6, 6') in der Direktreduktionsanlage (7) zum Bereitstellen der Reduktion des Metalloxidmaterials (5) bereitstellt.

6. Verfahren nach einem der vorhergehenden Ansprüche, wobei der eingeführte wasserstoffhaltige Reduzierwirkstoff (6, 6') über eine Reduzierwirkstoffeinlassvorrichtung (b), umfassend mindestens einen Reduzierwirkstoffeinlass der Direktreduktionsanlage (7), in die Direktreduktionsanlage (7) eingeführt wird.

7. Verfahren nach einem der vorhergehenden Ansprüche, wobei sich der mindestens eine erwünschte Passivierungsparameterwert (DPPV) auf einen Porositätsparameter und/oder einen Abmessungsparameter und/oder einen Gewichtsparameter und/oder einen Metallpartikelstrukturparameter und/oder einen Probeschnittgleichmäßigkeitsparameter und/oder einen Schwindungsparameter und/oder einen Sinterungsparameter und/oder einen Kaltbruchfestigkeitsparameter bezieht.

8. Metallmaterialproduktionsanordnung (1), die zur Reduktion eines Metalloxidmaterials (5), das Wärmeenergie hält, zu einem direktreduzierten Metallmaterial (16) angepasst ist; wobei die Metallmaterialproduktionsanordnung (1) Folgendes umfasst;
eine Metalloxidmaterialbereitstellereinheit (3), die zum Bereitstellen des Metalloxidmaterials (5), das Wärmeenergie hält, angeordnet ist;
eine Metalloxidmaterialladevorrichtung (a), die dazu angeordnet ist, das Metalloxidmaterial (5) in einen oberen Innenabschnitt (UP) einer Direktreduktionsanlage (7) zu laden;
eine Reduzierwirkstoffeinlassvorrichtung (b), die dazu angeordnet ist, einen wasserstoffhaltigen Reduzierwirkstoff (6) in einen Zwischeninnenabschnitt (IP) und/oder einen unteren Innenabschnitt (LP) der Direktreduktionsanlage (7) einzuführen, wobei der wasserstoffhaltige Reduzierwirkstoff (6, 6') dazu angepasst ist, mit dem Metalloxidmaterial (5), das Wärmeenergie hält, zum Reduzieren des Metalloxidmaterials (5) unter Verwendung der Wärmeenergie des Metalloxidmaterials (5) zu reagieren, um den eingeführten wasserstoffhaltigen Reduzierwirkstoff (6, 6') zum Bereitstellen einer chemischen Reaktion zwischen dem wasserstoffhaltigen Reduzierwirkstoff (6. 6') und dem Metalloxidmaterial (5) zu erhitzen oder ferner zu erhitzen; **dadurch gekennzeichnet, dass**
die Direktreduktionsanlage (7) der Metallmaterialproduktionsanordnung (1) zum Bereitstellen eines Hitzebehandlungsprozesses zur Hitzebehandlung des Metalloxidmaterials (5), das der Reduktion unterzogen wird, und/oder des direktreduzierten Metallmaterials (16) angeordnet ist; und
eine Steuerschaltung (50), die elektrisch an eine Reduzierwirkstofftemperatureinstellungsvorrichtung (17) gekoppelt ist, die dazu angeordnet ist, die Temperatur des wasserstoffhaltigen Reduzierwirkstoffs (6, 6') einzustellen, zum Steuern der Temperatur des eingeführten wasserstoffhaltigen Reduzierwirkstoffs (6, 6') zum Erreichen mindestens eines erwünschten Passivierungsparameterwerts (DPPV) des direktreduzierten Metallmaterials (16) angepasst ist; wobei die Direktreduktionsanlage (7) ferner einen Passivierungsparameterdetektor (PPD) umfasst, der an die Steuerschaltung (50) gekoppelt und zur Detektion eines realen Passivierungsparameterwerts (APPV) angeordnet ist; was bereitstellt, dass das direktreduzierte Metallmaterial (16), das aus der Direktreduktionsanlage (7) ausgestoßen wird, ein Zwischenprodukt bildet, das gegenüber einer erneuten Oxidation widerstandsfähig ist.

9. Metallmaterialproduktionsanordnung (1) nach Anspruch 8, wobei die Steuerschaltung (50) elektrisch an die Reduzierwirkstofftemperatureinstellungsvorrichtung (17) gekoppelt ist, die dazu angeordnet ist, den wasserstoffhaltigen Reduzierwirkstoff (6, 6') vorzuerhitzen, der in einen Zwischeninnenabschnitt (IP) und einen unteren Innenabschnitt (LP) der Direktreduktionsanlage (7) einzuführen ist.

10. Metallmaterialproduktionsanordnung (1) nach Anspruch 8 oder 9, wobei die Steuerschaltung (50) dazu angeordnet ist, die Temperatur des Metalloxidmaterials (5) zu steuern, das in die Direktreduktionsanlage (7) zu laden ist.

11. Datenprogramm (P), das zum Veranlassen der Metallmaterialproduktionsanordnung (1) nach einem der Ansprüche 8 bis 10 programmiert ist, um das Verfahren nach einem der Ansprüche 1 bis 7 auszuführen, wobei das Datenprogramm (P) einen Programmcode umfasst, der auf einem Computer der Steuerschaltung (50) zum Bereitstellen der folgenden Schritte lesbar ist:
- Reduzieren des Metalloxidmaterials (5) in dem oberen Innenabschnitt (UP) unter Verwendung der Wärmeenergie des Metalloxidmaterials (5), um den eingeführten wasserstoffhaltigen Reduzierwirkstoff (6, 6') zum Bereitstellen einer chemischen Reaktion zwischen dem wasserstoffhaltigen Reduzierwirkstoff (6, 6') und dem Metalloxidmaterial (5) zu erhitzen oder ferner zu erhitzen;
- Bereitstellen eines Hitzebehandlungsprozesses zur Hitzebehandlung des Metalloxidmaterials (5), das der Reduktion unterzogen wird, und/oder des direktreduzierten Metallmaterials (16), bevor es aus dem unteren Innenabschnitt (LP) ausgestoßen wird; und
- Steuern der Temperatur des eingeführten wasserstoffhaltigen Reduzierwirkstoffs (6, 6') zur Einstellung der chemischen Reaktion und/oder des Hitzebehandlungsprozesses zum Erreichen mindestens eines erwünschten Passivierungsparameterwerts (DPPV) des direktreduzierten Metallmaterials (16).

12. Datenmedium, das zum Speichern des Datenprogramms (P) nach Anspruch 11 angeordnet ist, wobei das Datenmedium einen Programmcode umfasst, der auf dem Computer zum Durchführen des Verfahrens nach einem der Ansprüche 1 bis 7 lesbar ist.

13. Produkt, das durch das Verfahren nach Anspruch 7 produziert ist, wobei das direktreduzierte Metallmaterial (16) aus reduzierten aneinandergebundenen Eisenerzpartikeln besteht, die Perlen aus hitzebehandeltem und/oder hitzegehärtetem und/oder passiviertem reduziertem Eisenerzmaterial in der Form von Eisentröpfchen bilden.

## Revendications

1. Procédé de réduction directe d'un matériau d'oxyde métallique (5) détenant de l'énergie thermique en un matériau métallique réduit directement (16) ; dans lequel
- le matériau d'oxyde métallique (5) détenant de l'énergie thermique est fourni au moyen d'une unité fournisseuse de matériau d'oxyde métallique (3) et est chargé par l'intermédiaire d'un dispositif de chargement de matériau d'oxyde métallique (a) dans une partie intérieure supérieure (UP) d'une installation de réduction directe (7) d'une configuration de production de matériau métallique (1) ;
- une circuiterie de commande (50) est connectée électriquement à un dispositif d'ajustement de température d'agent réducteur (17) configuré pour ajuster la température d'un agent réducteur contenant de l'hydrogène (6, 6') devant être introduit dans une partie intérieure intermédiaire (IP) et/ou une partie intérieure inférieure (LP) de l'installation de réduction directe (7) par l'intermédiaire d'un dispositif d'entrée d'agent réducteur (b) ;
le procédé est **caractérisé par** les étapes de :
- la réduction du matériau d'oxyde métallique (5) dans la partie intérieure supérieure (UP) en utilisant l'énergie thermique du matériau d'oxyde métallique (5) pour chauffer ou chauffer davantage l'agent réducteur contenant de l'hydrogène (6, 6') introduit pour fournir une réaction chimique entre l'agent réducteur contenant de l'hydrogène (6, 6') et le matériau d'oxyde métallique (5) ;
- la fourniture d'un processus de traitement thermique pour le traitement thermique du matériau d'oxyde métallique (5) soumis à réduction et/ou du matériau métallique réduit (16) avant d'être déchargé à partir de la partie intérieure inférieure (LP) ; et
- la commande de la température de l'agent réducteur contenant de l'hydrogène (6, 6') introduit pour l'ajustement de la réaction chimique et/ou du processus de traitement thermique pour atteindre au moins une valeur de paramètre de passivation souhaitée (DPPV) du matériau métallique réduit (16) ; dans lequel l'installation de réduction directe (7) comprend un détecteur de paramètre de passivation (PPD) connecté à la circuiterie de commande (50) configuré pour la détection d'une valeur de paramètre de passivation réelle (APPV) ; prévoyant que le matériau métallique réduit directement déchargé à partir de l'installation de réduction directe (7) forme un produit intermédiaire qui est résistant à une ré-oxydation.

2. Procédé selon la revendication 1, **dans lequel** le dispositif d'ajustement de température d'agent réducteur (17) comprend un dispositif de préchauffage d'agent réducteur (18) adapté pour ajuster la température d'un agent réducteur contenant de l'hydrogène (6, 6') introduit préchauffé, lequel dispositif de préchauffage d'agent réducteur (18) est connecté électriquement à la circuiterie de commande (50).

3. Procédé selon la revendication 1 ou 2, **dans lequel** l'étape de commande de la température de l'agent réducteur contenant de l'hydrogène (6, 6') introduit comprend l'adaptation de la température vers une température prédéterminée pour fournir le frittage du matériau d'oxyde métallique (5) soumis à réduction et/ou le traitement thermique du matériau métallique réduit (16) pendant une période de temps prédéterminée pour atteindre l'au moins une valeur de paramètre de passivation souhaitée (DPPV).

4. Procédé selon l'une quelconque des revendications 1 à 3, **dans lequel** l'agent réducteur contenant de l'hydrogène (6) introduit comprend 90 à 100 % d'hydrogène, de préférence 100 % d'hydrogène en volume.

5. Procédé selon l'une quelconque des revendications précédentes, **dans lequel** l'agent réducteur contenant de l'hydrogène (6, 6') introduit étant d'un tel volume qu'une réduction complète du matériau d'oxyde métallique (5) est obtenue, fournissant un volume excédentaire d'agent réducteur contenant de l'hydrogène (6, 6') dans l'installation de réduction directe (7) pour fournir ladite réduction du matériau d'oxyde métallique (5).

6. Procédé selon l'une quelconque des revendications précédentes, **dans lequel** l'agent réducteur contenant de l'hydrogène (6, 6') introduit étant introduit dans l'installation de réduction directe (7) par l'intermédiaire d'un dispositif d'entrée d'agent réducteur (b) comprenant au moins une entrée d'agent réducteur de l'installation de réduction directe (7).

7. Procédé selon l'une quelconque des revendications précédentes, **dans lequel** l'au moins une valeur de paramètre de passivation souhaitée (DPPV) concerne un paramètre de porosité et/ou un paramètre de dimension et/ou un paramètre de poids et/ou un paramètre de structure de particule métallique et/ou un paramètre de régularité de coupe d'échantillon et/ou un paramètre de retrait et/ou un paramètre de frittage et/ou un paramètre de résistance à l'écrasement à froid.

8. Configuration de production de matériau métallique (1) adaptée pour la réduction d'un matériau d'oxyde métallique (5) détenant de l'énergie thermique en un matériau métallique réduit directement (16) ; la configuration de production de matériau métallique (1) comprend ;
une unité fournisseuse de matériau d'oxyde métallique (3) configurée pour fournir le matériau d'oxyde métallique (5) détenant de l'énergie thermique ;
un dispositif de chargement de matériau d'oxyde métallique (a) configuré pour charger le matériau d'oxyde métallique (5) dans une partie intérieure supérieure (UP) d'une installation de réduction directe (7) ;
un dispositif d'entrée d'agent réducteur (b) configuré pour introduire un agent réducteur contenant de l'hydrogène (6) dans une partie intérieure intermédiaire (IP) et/ou une partie intérieure inférieure (LP) de l'installation de réduction directe (7), moyennant quoi l'agent réducteur contenant de l'hydrogène (6, 6') est adapté pour réagir avec le matériau d'oxyde métallique (5) détenant de l'énergie thermique pour réduire le matériau d'oxyde métallique (5) en utilisant l'énergie thermique du matériau d'oxyde métallique (5) pour chauffer ou chauffer davantage l'agent réducteur contenant de l'hydrogène (6, 6') introduit pour fournir une réaction chimique entre l'agent réducteur contenant de l'hydrogène (6. 6') et le matériau d'oxyde métallique (5) ; **caractérisée par**
l'installation de réduction directe (7) de la configuration de production de matériau métallique (1) est configurée pour fournir un processus de traitement thermique pour le traitement thermique du matériau d'oxyde métallique (5) soumis à réduction et/ou du matériau métallique réduit directement (16) ; et
une circuiterie de commande (50), connectée électriquement à un dispositif d'ajustement de température d'agent réducteur (17) configuré pour ajuster la température de l'agent réducteur contenant de l'hydrogène (6, 6'), est adaptée pour commander la température de l'agent réducteur contenant de l'hydrogène (6, 6') introduit pour atteindre au moins une valeur de paramètre de passivation souhaitée (DPPV) du matériau métallique réduit directement (16) ; dans laquelle l'installation de réduction directe (7) comprend en outre un détecteur de paramètre de passivation (PPD) connecté à la circuiterie de commande (50) configuré pour la détection d'une valeur de paramètre de passivation réelle (APPV) ; prévoyant que le matériau métallique réduit directement (16) déchargé à partir de l'installation de réduction directe (7) forme un produit intermédiaire qui est résistant à une ré-oxydation.

9. Configuration de production de matériau métallique (1) selon la revendication 8, **dans laquelle** la circuiterie de commande (50) est connectée électriquement au dispositif d'ajustement de température d'agent réducteur (17) configuré pour préchauffer l'agent réducteur contenant de l'hydrogène (6, 6') devant être introduit dans une partie intérieure intermédiaire (IP) et une partie intérieure inférieure (LP) de l'installation de réduction directe (7).

10. Configuration de production de matériau métallique (1) selon la revendication 8 ou 9, **dans laquelle** la circuiterie de commande (50) est configurée pour commander la température du matériau d'oxyde métallique (5) devant être chargé dans l'installation de réduction directe (7).

11. Programme de données (P), programmé pour amener la configuration de production de matériau métallique (1) selon l'une quelconque des revendications 8 à 10 à exécuter le procédé selon l'une quelconque des revendications 1 à 7, dans lequel ledit programme de données (P) comprend un code de programme lisible sur un ordinateur de la circuiterie de commande (50) pour fournir :
- la réduction du matériau d'oxyde métallique (5) dans la partie intérieure supérieure (UP) en utilisant l'énergie thermique du matériau d'oxyde métallique (5) pour chauffer ou chauffer davantage l'agent réducteur contenant de l'hydrogène (6, 6') introduit pour fournir une réaction chimique entre l'agent réducteur contenant de l'hydrogène (6, 6') et le matériau d'oxyde métallique (5) ;
- la fourniture d'un processus de traitement thermique pour le traitement thermique du matériau d'oxyde métallique (5) soumis à réduction et/ou du matériau métallique réduit directement (16) avant d'être déchargé à partir de la partie intérieure inférieure (LP) ; et
- la commande de la température de l'agent réducteur contenant de l'hydrogène (6, 6') introduit pour l'ajustement de la réaction chimique et/ou du processus de traitement thermique pour atteindre au moins une valeur de paramètre de passivation souhaitée (DPPV) du matériau métallique réduit directement (16).

12. Support de données, configuré pour stocker le programme de données (P) selon la revendication 11, dans lequel le support de données comprend un code de programme étant lisible sur l'ordinateur pour réaliser le procédé selon l'une quelconque des revendications 1 à 7.

13. Produit généré par le procédé selon la revendication 7, **dans lequel** le matériau métallique réduit directement (16) consiste en des particules de minerai de fer réduit se lient les unes aux autres formant des boulettes de matériau de minerai de fer réduit traité thermiquement et/ou durci thermiquement et/ou passivé sous la forme de gouttes de fer.
